(19) Europäisches Patentamt
European Patent Office
Office européen des brevets

(11) EP 4 738 384 A2

(12) EUROPEAN PATENT APPLICATION

(43) Date of publication:
06.05.2026 Bulletin 2026/19

(51) International Patent Classification (IPC):
G21B 1/19 (2006.01)

(21) Application number: 26151114.1

(22) Date of filing: 10.08.2021

(52) Cooperative Patent Classification (CPC):
G21B 3/004; G21B 1/19; Y02E 30/10

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 10.08.2020 US 202063063797 P

(62) Document number(s) of the earlier application(s) in accordance with Art. 76 EPC:
21782612.2 / 4 193 372

(71) Applicant: NK Labs, LLC
Arlington, MA 02474 (US)

(72) Inventors:
• KNAIAN, Ara
Arlington, 02474 (US)
• MACFADDEN, Nathaniel
Arlington, 02474 (US)

• HARRINGTON, Demetrious
Arlington, 02474 (US)
• SPOOL, Ira
Arlington, 02474 (US)

(74) Representative: Mewburn Ellis LLP
Aurora Building
Counterslip
Bristol BS1 6BX (GB)

Remarks:
•This application was filed on 09.01.2026 as a divisional application to the application mentioned under INID code 62.
•Claims filed after the date of receipt of the divisional application (Rule 68(4) EPC).

(54) **MUON-CATALYZED FUSION REACTOR AND SYSTEM WITH ELECTROMAGNETIC MUON REACTIVATION AND METHODS OF MAKING AND USE THEREOF**

(57)     An aspect of the present disclosure includes a fusion reactor including a reactor housing extending in an axial direction from a first end to a second end, wherein the reactor housing includes a first port, a second port, a fluid communication port, and a charged particle source delivery port, a fuel hopper located within the reactor housing proximal to the first end, an outlet located within the reactor housing proximal to the second end, a plurality of magnetic field generating coils located about the reactor housing, wherein the plurality of magnetic field generating coils are oriented to produce a directional magnetic field within the reactor housing, a plurality of electrodes extending within the reactor housing from the first end to the second end, wherein the plurality of electrodes are configured to generate a plurality time-varying electric fields via an electrical source.

FIG. 1A

**Description**

CROSS-REFERENCE TO RELATED APPLICATIONS

The current application claims priority to and the benefit of United States Provisional Application No. 63/063,797 filed on August 10, 2020, entitled "MUON-CATALYZED FUSION REACTOR AND SYSTEM WITH ELECTROMAGNETIC MUON REACTIVATION AND METHODS OF MAKING AND USE THEREOF," the contents of which are hereby incorporated by reference in their entireties.

FIELD OF THE TECHNOLOGY

Aspects of the present disclosure relate to fusion reactors, systems, and methods of making and use thereof, and, in particular, to catalyzed fusion reactors.

BACKGROUND

There exist many possible methods for producing energy to meet the demands of modern society. Many of these different methods include a variety of advantages and disadvantages. For example, solar and wind power are clean and renewable sources of energy, but only supply power when the sun is shining or the wind is blowing. Burning fossil fuel may produce energy on-demand, but is limited in quantity, while the process of obtaining the fuel via operations such as mining and fracking, may damage the environment. Further, the exhaust produced by burning these fuels may contain chemical pollutants and carbon dioxide, which may also contribute to the disruption of vital ecosystems and habitats.
Nuclear fission provides a reliable source for baseload electrical power generation, but produces long-lived radioactive waste, among other drawbacks. Thus, there exists an unmet need to continue to research and develop alternative methods of viable and clean energy production, such as nuclear fusion.

SUMMARY

Aspects of the present disclosure relate to a fusion reactor and system and methods of making and use thereof, that may be used for various purposes, such as to generate electricity, do mechanical work, , produce neutrons, or produce medical isotopes therefrom.
The fusion reactor may be comprised of a housing structure including a centralized vacuum region, wherein the reactor housing may be configured to interoperate with a muon generating system, such that the muon generating system may supply muons to the centralized vacuum region. The reactor housing may further interoperate with a particle trapping system and a particle accelerator system. The muon generating system may generate muons by facilitating collisions between two muon-generating particles, such as collisions or other interactions between two tritium particles or one tritium particle and one deuterium particle, for example (the various particles, atoms, ions, and other atomic and subatomic material also interchangeably being referred to individually, by category and/or collectively herein as "atomic material"). Upon the interaction between the muon-generating particles occurring, a pion subatomic particle may be released, wherein the pion may then spontaneously decay into a muon. In one example, the muon generating system may be comprised of a particle accelerator, such as a cyclotron, positioned external to the reactor housing, wherein the particle accelerator may be configured to accelerate a beam of the muon-generating particles into the reactor housing. Once inside the reactor housing, the beam of muon generating particles may become trapped or otherwise encouraged to be contained within a trapping or containment system. In one example implementation, the trapping or containment system may include a plurality of magnetic coils positioned to trap or otherwise function to encourage containment of the muon-generating particles via one or more magnetic fields, wherein the magnetic fields may bias the particles onto spiraling paths toward the center of the centralized vacuum region, increasing the probability that a muon generating collision may occur.
The fusion reactor may further include a microencapsulated fuel pellet dispersion system, wherein the microencapsulated fuel pellet dispersion system may be configured to disperse a plurality of microencapsulated fuel pellets into the centralized vacuum region, such that muons generated by the muon generating system may interact with the mass of atomic matter encapsulated within the microencapsulated fuel pellet. The generated muon may then interact with a single particle within the atomic matter to form a muonic atom. The muonic atom may then react with a separate particle within the atomic matter such that a nuclear fusion reaction may occur. The nuclear fusion reaction may occur either within the original microencapsulated fuel pellet or in a proximally located microencapsulated fuel pellet, for example. Upon fusion or other interaction of the muonic atom and the separate particle within the atomic matter, the muon may be released, such that the muon may be free to continue to catalyze fusion reactions within other of the particles encapsulated within any of the plurality of microencapsulated fuel pellets suspended in the centralized vacuum region.
Occasionally, instead of being released as a free muon, the fusion reaction may release the muon in a state of being stuck to a helium ion, the combination being referred to as a muonic helium ion (Note that an alpha particle may be a helium ion, and a muonic alpha particle is a muonic helium ion.) The particle accelerating system, configured to interoperate with the reactor housing, may accelerate the muonic helium ion, such that the probability that the muon stuck within the muonic helium ion will be released via collisions with particles in the surrounding high density regions of atomic matter increases before the muonic helium ion establishes thermodynamic equilibrium with the surrounding atomic matter. In one example implementation, the subatomic particle accelerating system may include a plurality of electrodes configured to create a variable electric field, wherein the electric field may accelerate the muonic helium ions.

The fusion reaction may release energy, such as in the form of heat, wherein the fusion reactor may be configured to transform the energy released in the fusion process to productive work. Specifically, for example, the fusion reactor may be further configured to interoperate with a generator or other output system, such that energy released in the fusion reaction may transformed into useable electric, mechanical, or electromechanical power, wherein the generator or other output system may additionally be configured to interoperate under command of an operational controller. The operational controller may be configured to monitor and control the operation of the reactor system.

Additional advantages and novel features of these aspects will be set forth in part in the description that follows, and in part will become more apparent to those skilled in the art upon examination of the following upon learning by practice of the disclosure.

BRIEF DESCRIPTION OF THE DRAWINGS

Other aspects, advantages and novel features of the invention will become more apparent from the following detailed description of the invention when considered in conjunction with the accompanying drawings, wherein:

Fig. 1A depicts various features of an example muon-catalyzed fusion reactor (cutaway view) with a magnetic mirror configuration, as well as bar-shaped electrodes to apply a variable electric field, a fuel hopper for metered dispensing the fuel capsules, and a port for injection of muons or a particle beam used for muon production, in accordance with aspects of the present disclosure.

Fig. 1B shows the reactor of Fig. 1A in a perspective (non-cutaway) view.

Fig. 1C depicts a partial cutaway view of the reactor of Figs. 1A and 1B, with the addition of an interoperating auger to lift fuel pellets for recirculation to the reactor.

Fig. 1D shows an example power drive and direct energy recovery circuit usable in accordance with the example reactor and additional features depicted in Figs. 1A-1C.

Fig. 1E shows example circuitry that may be used, for example, in the one or more the inverter stage blocks of the circuit shown in Fig. 1D.

Fig. 1F depicts aspects of another example reactor containing similar features to the reactor of Figs.1A-1C, but wherein the electrodes of the reactor of the reactor of Figs. 1A-1C are replaced with antennae.

Fig. 2 depicts various features of an example muon-catalyzed fusion reactor with a toroidal configuration, with circular electrodes to apply a rotating magnetic field, and with one or more ports for injection of muons or particle beams used for muon production, in accordance with aspects of the present disclosure.

Fig. 3 is a representative close up view of the active area of the reactor, showing subatomic particle and ion trajectories associated with muon catalyzed fusion and muon reactivation, in accordance with aspects of the present disclosure.

Fig. 4 is a representative close-up view of one of the fuel capsules shown in Fig 3, showing subatomic particle and ion trajectories associated with muon catalyzed fusion inside the capsule, in accordance with aspects of the present disclosure.

Fig. 5 is a close up representative view of the active area of the reactor, showing subatomic particle and ion trajectories associated with muon production, in accordance with aspects of the present disclosure.

Figs. 6A-6D depict various aspects of example encapsulated fuel pellets or capsules, having nuclear fusion fuel contained within an external cladding, in accordance with aspects of the present disclosure.

Fig. 7 contains a cross-sectional view of an example high-density reactor, in accordance with aspects of the present disclosure.

Fig. 8 shows various features of another high-density reactor, in accordance with aspects of the present disclosure

Fig. 9 shows various aspects of an internal muon production target usable with various other features a reactor in accordance with aspects of the present disclosure .

Fig. 10 shows an example variable hole density sifter usable with various other features of a reactor in accordance with aspects of the present disclosure .

Fig. 11 shows an example fuel dispensing nozzle usable with various other features of a reactor, in accordance with aspects of the present disclosure.

Fig. 12 a representative diagram of various aspects of an example control system for implementing a fusion reactor core in accordance with aspects of the present disclosure.

Figs. 13A and 13B depict various aspects of an example reactor that works in conjunction with external charged particle optics to return reactivated muons to the catalysis cycle, in accordance with aspects of the present disclosure.

Fig. 13C depicts an example reactor that uses periodically-placed sheets of fuel, in accordance with aspects of the present disclosure.

Fig. 14 presents a representative diagram of power and/or particle/fluid flow among various components and features of an example reactor system implementing a fusion reactor core in accordance with aspects of the present disclosure.

Fig. 15 shows a representative diagram of fuel flow among various components and features of an example reactor system implementing a fusion reactor core in accordance with aspects of the present disclosure.

Fig. 16 shows a representative view of various features of an example computer system usable in accordance with aspects of the present disclosure.

Fig. 17 shows a representative view of various example computer system components in a network, usable in accordance with aspects of the present disclosure.

## DETAILED DESCRIPTION

While example embodiments in accordance with aspects of the present disclosure are disclosed in the attached materials, many other implementations will occur to one of ordinary skill in the art and are all within the scope hereof. Each of the various embodiments described may be combined with other described embodiments in order to provide multiple features. Furthermore, while the attached materials describe a number of separate embodiments of the apparatus and method of the present disclosure, what has been described is merely illustrative of the application of the principles hereof. Other arrangements, methods, modifications, and substitutions by one of ordinary skill in the art are therefore also considered to be within the scope of the present disclosure.

In this document, the word "gas" is used as a shorthand for both the gaseous and supercritical fluid states of matter, as is common in engineering usage. The word "accelerate" is used to describe either an increase or decrease in velocity, as is standard in physics usage.

In order to more clearly explain the various components, features, and operation, including theoretical underpinnings, this description is divided into the following subsections: 1) overview of components and operation of reactor, system, and methods of construction and operation thereof; 2) scientific principles and theory of operation; 3) description of details of core reactor components and operation; 4) description of the microencapsulated fuel pellets; and 5) aspects of control operations and collection and use of data, including software and related hardware therefor.

Aspects of the present disclosure relate to a fusion reactor and system and methods of making and use thereof, that may be used for various purposes, such as to produce work therefrom, including producing energy sufficiently greater than the energy required to operate the reactor in order, among other things, to produce a useful source of energy. Such work may include, for example, transformation of heat and/or other output to a turbine for operation thereof, including for use in producing energy. The reactor may include:

1) a reactor core configured to produce the productive heat and other output;
2) a particle accelerator interoperable with the reactor core for delivery of a stream of charged particles thereto;
3) a breeding blanket at least partially surrounding the reactor core, the breeding blanket being configured in part to produce particles usable in the stream;
4) a generator or other output interoperable with the reactor core to translate the productive heat or other output into work; and
5) an operational controller to monitor and control operation of the reactor system.

Additional features may be included with or supplement the above items.

Nuclear fusion is a method of energy production where two atomic nuclei fuse to form a single atomic nucleus. During the fusion process, large quantities of energy are released, wherein the released energy may be used to do useful electrical or mechanical work. For example, the sun, a main-sequence star, releases energy by the fusion of hydrogen nuclei into helium. To fuse, the nuclei need to come into very close proximity so that the strong force may bind them together. But because the nuclei are positively charged, they repel each other due to the electrostatic force. This creates an energy "barrier", termed the Coulomb Barrier, that must be overcome for fusion to occur. Nuclei can come close enough to fuse due to quantum tunneling, and in fact, this is what happens in the sun. However, the volumetric efficiency of the sun is only about 270 watts per cubic meter, which is too low for an economical fusion reactor on Earth. Because of the high kinetic energy requirements necessary to overcome the Coulomb barrier by inducing collisions between charged nuclei, the Coulomb barrier introduces a plurality of technical problems that have increased the difficulty of implementing useful controlled nuclear fusion on Earth.

Further, because a collision between any two particles proximally located within space is not guaranteed, controlled nuclear fusion also requires increasing the probability that a collision that results in nuclear fusion will occur. Thus, in addition to technical problems introduced consequent of the Coulomb barrier, controlled nuclear fusion also requires maximizing the rate of particle collisions. The rate of particle collisions may be maximized via controlling the volume in which the particles are contained, and/or controlling the speed of those particles, which both pose a variety of technological challenges. However, because controlled nuclear fusion carried out on Earth has the potential to be a clean source of energy, with a plentiful supply of low-cost fuel, and without production of long-lived radioactive waste or greenhouse gases, there remains a need to overcome the plurality of technical problems associated with overcoming the Coulomb Barrier and maximizing the rate of particle collisions, such that nuclear fusion may become an implementable source of energy production.

In the related nuclear fusion art, there are a plurality of methods for facilitating nuclear fusion that overcome the challenges introduced by the Coulomb barrier.

One method to overcome the Coulomb Barrier, frequently implemented in the related art, is to accelerate an atomic nucleus towards another at a sufficient speed that the particle contains the amount of kinetic energy necessary to overcome the electrostatic potential between the nuclei. This is called beam-beam or beam-target fusion, depending on whether the nuclei are being shot at other mobile nuclei or at a fixed target. However, a portion of the collisions do not result in fusion, but the accelerating energy must be provided in either case, placing an upper limit on the ratio of energy produced to energy supplied. Due to its flexibility and simplicity, beam-target fusion is very useful for scientific research and isotope production, but net energy production with this approach has not been demonstrated.

Another way to overcome the Coulomb barrier is thermonuclear fusion. In this method, one heats the fusion fuel to a sufficiently high temperature that its molecules have a sufficiently high kinetic energy to fuse with each other when they collide naturally due to thermal fluctuations. This temperature is high enough that the state of matter is a plasma. As compared to beam-beam or beam-target fusion, this method allows re-use of the energy used to accelerate the nuclei over multiple collisions, a significant advantage. However, the use of a plasma to facilitate fusion reactions introduces a separate plurality of technical problems. In particular, the temperature of the plasma is hotter than the melting point of any material, making it difficult to contain in one place. In gravitational confinement fusion, as occurs in the sun and other stars, the plasma is held together by its own gravity, but this requires an astronomical amount of mass to be practical. In magnetic confinement fusion, the plasma is levitated using externally-applied magnetic fields. In inertial confinement fusion, the heating and fusion are carried out very quickly, before the plasma has time to expand.

The fusion energy gain factor, Q, is defined as the fusion power released in the fusion reaction divided by the external power input needed to maintain the system at a steady state. The scientific breakeven point is defined as a fusion gain of 1. The engineering breakeven point accounts for the inevitable losses in the conversion of heat to electricity and the conversion of wall-plug power to plasma heating power, and typically occurs at a fusion gain of approximately 5. The economic breakeven point is reached when a power plant can generate electricity that is worth more than the costs of operating the thermonuclear fusion power plant. Finally, the commercial breakeven point occurs when the value of the electricity generated is enough to pay for the costs of both constructing and operating the fusion reactor.

One of the technical problems with thermonuclear fusion reactors in the related art is related to maintaining plasma stability. At a minimum, the plasma must be kept stable long enough to be heated to the temperature required to overcome the Coulomb barrier, and then to undergo fusion long enough to recover the energy needed for the process of heating.

In order to breakeven in energy production via plasma fusion, the fusion triple product, which is the product of temperature, density, and confinement time, must be greater than a critical threshold value known as the Lawson Criterion. That critical threshold value has proven difficult to obtain, despite the theoretical design and experimental implementation of a plurality of magnetic confinement thermonuclear fusion reactor machines in the related art.

A third method for overcoming the Coulomb Barrier is a process known as a muon-catalyzed fusion, wherein the present disclosure describes a novel reactor. Muon-catalyzed fusion overcomes the Coulomb barrier through creation of a muonic molecule, in which two positively-charged nuclei are chemically bonded to each other by a negatively-charged muon. The bond distance between the nuclei is much smaller in a muonic molecule than in an ordinary molecule. When a muonic molecule of containing a deuterium nucleus and a tritium nucleus is formed, the two nuclei have a high probability of fusion via quantum tunneling within picoseconds. The bulk temperature of the surrounding material can be low enough for the fuel to be contained by ordinary materials without melting them.

When a muon catalyzes fusion in atomic matter comprised of a mixture of deuterium and tritium, the total energy released per fusion, including that released in a surrounding breeding blanket, may reach approximately 22.4 MeV. The energy required to create a muon via beam-target collisions is approximately 2500 MeV. Muons decay within microseconds. To achieve engineering breakeven, with Q=5, each muon would need to catalyze a number of fusions, such as approximately 500 fusions. When implementing the muon-catalyzed fusion reactor of the present disclosure, this engineering breakeven point may be possible to achieve.

The process of muon-catalyzed fusion may be understood as a series of reactions, wherein one of these reactions involves the fusion of the two nuclei. A muon is a subatomic particle that, like an electron, has a charge of -1 and a spin of ½. Though similar to an electron in these aspects, a muon differs from an electron in that the muon has a mass approximately 207 times greater than the mass of an electron. Because muons and electrons both share a charge of -1 and a spin of 1/2, muons may be "captured" into classically understood atomic orbitals similar to how electrons may be "captured" within classically understood atomic orbitals. When muons are "captured" within these atomic orbitals, the relative mass of the muon, wherein the muon is approximately 207 times more massive than an electron, may reduce the size of the atomic orbital in which the muon is "captured."

In the example of a muon-catalyzed fusion reaction between a tritium atom and a deuterium atom, a neutron and a helium nucleus are produced. During a muon-catalyzed nuclear fusion reaction, the helium nucleus is released with approximately 3.5 MeV of kinetic energy. The neutron is released with approximately 14.1 MeV of kinetic energy. For comparison, burning coal in oxygen liberates approximately 4 eV per atom of fuel input, which is less than one millionth of the energy per atom of fuel produced in a muon-catalyzed fusion reaction. Most of the time, upon conclusion of the fusion reaction, the muon that initially catalyzed the fusion reaction is subsequently "freed," such that the freed muon may then catalyze more fusion reactions via the same process.

Researchers at many accelerator facilities worldwide have reported on the order of 150 fusion reactions per muon may result. This effect has been observed over a range of temperatures, including room temperature, from cryogenic temperatures through about 800 K. The effect has been observed with the with the atomic matter undergoing muon-catalyzed fusion in the solid, liquid, and gaseous states.

Though a wide variety of different particles or atomic material may be used in the muon-catalyzed fusion reaction, the most commonly used atomic material include the hydrogen isotopes tritium and deuterium. Deuterium is a stable isotope of hydrogen containing one proton and one neutron, wherein tritium is an unstable isotope of hydrogen containing one proton and two neutrons. Tritium has a half-life of about 12.5 years.

Like many chemical reactions, the rate of muon catalyzed fusion increases with the temperature and density of the reactants. Because of the short lifetime of the muon, the muon catalyzed fusion reaction rate needs to high to allow for a large number of fusions per muon and a high fusion gain. Because of this, in a muon catalyzed fusion reactor, it is advantageous for the fuel to exist simultaneous at a high temperature (e.g. 800K) and at a high density, for example at the density of liquid hydrogen.

In approximately 1% of muon-catalyzed fusion reactions, the muon is not freed. Instead, such as in the example of the tritium-nuclei deuterium-nuclei fusion reaction, the negatively-charged muon can be released from the fusion reaction stuck to the positively-charged helium nucleus as a muonic helium ion. When the muon is stuck in the muonic helium ion, the muon is not free to catalyze more fusion reactions. The phenomenon wherein the muon is occasionally not freed as an independent product of the fusion reaction is a known as sticking. To allow the muon stuck within the muonic helium ion to continue catalyzing fusion reactions, the muon may be removed from the muonic helium ion. The process of removing the muon from the muonic helium ion is known as muon reactivation. Muon reactivation may occur naturally when the muonic helium ion, ejected with approximately 3.5 MeV of kinetic energy, travels over some distance. In this distance travelled, the muonic helium ion may collide with other atoms or particles within the surrounding atomic material, such that the resulting collision frees the muon from the muonic helium ion. However, when a muonic helium ion is ejected from the fusion reaction, the muonic helium ion undergoes a loss of kinetic energy as it travels through the surrounding material and collides with other atoms. Once the muonic helium ion establishes thermodynamic equilibrium with the surrounding material, the muonic helium ion ceases to undergo subsequent collisions with the surrounding atomic matter having sufficient energy for muon reactivation, for the remainder of its lifespan. Consequently, if the muonic helium ion loses a sufficient amount of kinetic energy, the stuck muon will not be able to catalyze more fusion reactions.

[0033]  [0016] This application describes reactors containing means to induce additional ("artificial") muon reactivation, by providing additional energy to the stuck muons so that they may experience more collisions before thermalization. One method for increasing the kinetic energy of the muonic helium ions includes introducing elements of a particle accelerator into or around the reactor vessel. The muonic helium ions may be accelerated using a plurality of different methods known in the related art of particle physics. However, in one example, muonic helium ions may be accelerated via the introduction of a rotating electric field with a frequency close to the cyclotron resonance frequency of the muonic helium particle. The rotating electric field may be created via a variety of different methods, such that the probability that the muonic helium ions will undergo collisions that result in reactivation of the stuck muon is increased. However, the introduction of an electric field to accelerate the muonic helium ions introduces a problem with regard to the breakdown voltage of gasses.

The breakdown voltage of a gas is the minimum voltage that causes the gas to become electrically conductive. Above the breakdown voltage, a free electron can acquire enough kinetic energy to ionize nearby atoms and cause an electron avalanche. When a gas reaches its breakdown voltage, the gas becomes a much better conductor, such that it may become very difficult, if not experimentally impossible to induce a significant electric field within the gas without passing a significant electric current through the gas. The breakdown voltage of a gas varies with the density. In vacuum conditions, the breakdown voltage may be high, because there is a shortage of electrons for the avalanche. As the density of the gas increases, the breakdown voltage decreases, reaching a minimum and then increases again. At high density, the breakdown voltage is also high, because an ionized electron is stopped by collisions before it can acquire enough kinetic energy to ionize other atoms.

Recall that it is beneficial for the fuel to exist at high density inside the reactor vessel, in order to increase the reaction rate. However, on the high density side of the breakdown voltage curve (for example, near liquid hydrogen density) the breakdown voltage of hydrogen gas is lower than the voltage required to accelerate a muonic helium ion to speeds sufficient to induce significant artificial reactivation. On the low-density side of the breakdown voltage curve, at near-vacuum conditions, the voltage required to induce artificial reactivation is below the breakdown voltage.

Thus, in order to facilitate both the fusion reaction and the reactivation collision, the reactor environment would need proximally positioned regions of high density and low density/vacuum. Consequently, the use of an electric field to accelerate the muonic helium ions introduces a problem of engineering implementation, wherein technical problems arise in the related art when attempting construction a reactor that meets the aforementioned technical requirements. Aspects of the present disclosure relate to a reactor and microencapsulated fuel pellet design and configuration that may resolve these technical problems.

According to aspects of the present disclosure, the technical problem as articulated above may be resolved by the contemporaneous introduction of two different, yet complimentary solutions. The first of these two solutions may involve the introduction of high density regions of fuel within the fusion reactor by encapsulating the fuel, such as some combination of tritium and deuterium in a microcapsule. The microcapsule may be comprised of a material that differs from the atomic material that undergoes fusion in the muon-catalyzed fusion process. In one example, the microcapsule may be comprised of graphene or another similar carbon-based material. Further, the microcapsule may facilitate the creation of a high-pressure region within the microcapsule, such that the pressure of the encapsulated fuel consequently increases the density of the fuel. The formation and implementation of these microencapsulated fuel pellets is described below in greater technical detail.

A plurality of the high-density microencapsulated fuel pellets may then be functionally suspended within a low-density or vacuum environment. The functional suspension of the microencapsulated fuel pellets occurs not with any technical device, though a dispersion system, described in greater detail below, may be necessary to disperse the microencapsulated fuel pellets within the vacuum inside of the fusion reactor. Instead, the microencapsulated fuel pellets are functionally suspended consequent of the rate at which the microencapsulated fuel pellets travel through the low/no density region of the reactor environment relative to the rates at which the fusion and reactivation collisions occur. Specifically, the microencapsulated fuel pellets, when dispersed within the low/no density environment, travel at a speed on the order of meters per second due to the force of gravity. Comparatively, the fusion and muon reactivation collisions occur on the order of microseconds. Consequently, the microencapsulated fuel pellets are functionally stationary in comparison to the dynamics of the muon-catalyzed fusion reactions, such that the microencapsulated fuel pellets are "suspended", relative to the rate of the fusion and reactivation collisions.

The introduction of the microencapsulated fuel pellets suspended within a vacuum creates an environment comprised of a plurality of high density regions interspersed amongst a low density environment, such that regions of high density and low density exist contemporaneously and proximally to each other, such that the fusion reaction rate is maximized in the high density regions, wherein the ejected muonic helium ions may be sufficiently accelerated within adjacent low density regions to increase the probability that the stuck muons may be reactivated, without concern for introducing electrical breakdown in any part of the system. Consequently, the reactor as described in the present disclosure may increase the number of fusions per muon beyond that of the related art, potentially above engineering breakeven.

Further, in order to facilitate nuclear fusion via a muon catalyzed process, muons may be created or otherwise supplied to or within the vacuum housing, such that the muons may catalyze fusion reactions within the microencapsulated fuel pellets. In one example, muons may be produced by bombarding atomic matter with highly energetic (about 1 GeV per nucleon) protons, neutrons, or ions. The energy cost to produce a muon by such bombardment may be approximately 2.5 GeV.

However, in another example, muons may be produced by energetic collisions between baryons. (Protons and neutrons are both baryons.) These collisions may produce pions, wherein the pions then quickly decay into muons. The center-of-mass energy of the collision between the two baryons must be above the threshold energy for pion production. This level of energy may be achieved with lower lab-frame energy through collisions between two oppositely-directed baryons, especially if the collision between the two baryons is head-on, rather than between a moving baryon and a stationary baryon-containing target. Production of negative muons is favored in collisions between neutrons. However, collisions between bare neutrons are difficult to implement, at least in part because pure neutron beams cannot be accelerated by electric fields or guided by magnetic fields due to their lack of charge. However, colliding triton beams, wherein triton is an ion of tritium, may be an efficient and practical source of generating negative muons, at least in part because the tritons have a low mass per individual particle in addition to a high neutron content per particle.

It is important to note that though a positive net energy production, where more energy is output from the reactor than is input into the reactor, is highly desirable for commercial implementations, a muon-catalyzed fusion reactor that does not achieve a positive net energy production is still a useful device. For example, non-net energy positive fusion reactors may be productively used for rocket propulsion, for production of medical isotopes, for production of medical neutron beams, for testing of material properties, for transmutation of radioactive waste, as a component of an energy-producing fusion-fission hybrid reactor, for education, or for research, for example.

Aspects of the present disclosure include devices, systems, and methods for increasing the rate of collisions between muonic atoms and other atomic material and thus the number of muon-catalyzed fusion reactions, and thus the energy release per input energy, as compared to related art approaches to muon-catalyzed fusion. Aspects of the disclosure further include systems, devices, and methods that enable more efficient muon-catalyzed fusion, as compared to related art approaches to nuclear fusion.

The temperature required for muon-catalyzed fusion is much lower than that required for thermonuclear fusion, and the state of matter of the fusing material may be solid, liquid or gas, rather than plasma.

In muon-catalyzed fusion, the muon is sometimes trapped within the atomic orbital of the helium atom created in the fusion process. forming a muonic helium ion with a high velocity. This high-velocity ion may slow down through collisions with the surrounding matter and other methods such as ionization. In some cases, the muon may be released, or in other words reactivated from the muonic helium ion during one of these collisions, but otherwise it may remain stuck within the muonic helium ion. Aspects of the devices, systems, and methods of making and use thereof described herein may include application of an electric field, such that the muonic helium ions maintain sufficient velocity in order to increase the number of collisions with sufficient energy for reactivation that they may undergo. This approach in turn may increase the fraction of muons released from muonic helium ions, and thus increase the total number of fusion reactions that occur, and thus increase the amount of energy released in the muon-catalyzed fusion reactor.

In accordance with example implementations of such devices, systems, and methods of making and use thereof, the muon catalyzed fusion reaction rate may be increased with increased density of the fuel. Because muons have a finite lifetime and eventually decay, it may be advantageous for the fusion reactions to occur at a sufficient rate to be effective relative to this decay rate. Aspects of example devices, systems, and methods described herein include regions of high-density microencapsulated fuel, where fusion may occur at a high rate, surrounded by regions of low-density matter or vacuum, wherein the particles involved in the muon generating collisions and the subatomic particles involved in the muon reactivating collisions may be sufficiently accelerated by an electric field. Additionally, devices and methods are disclosed for fuel handling, fuel purification, and for reactor diagnostics.

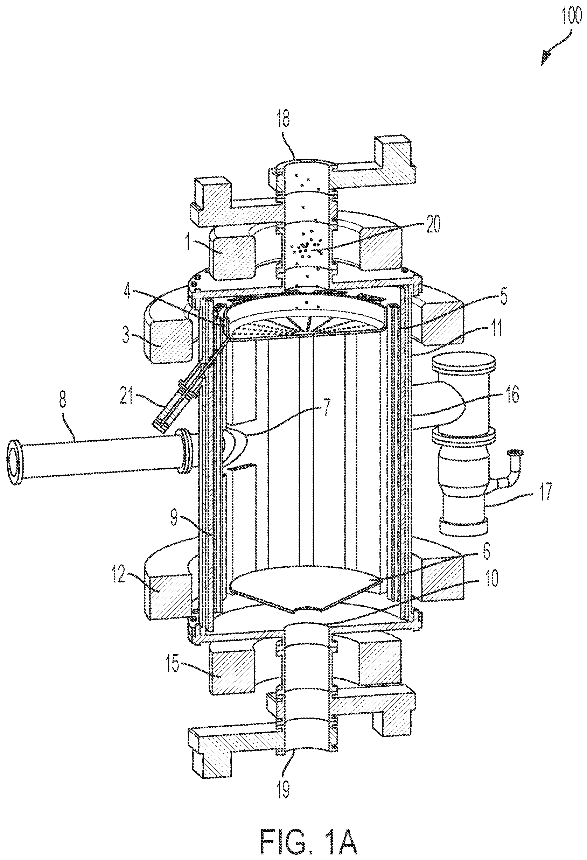

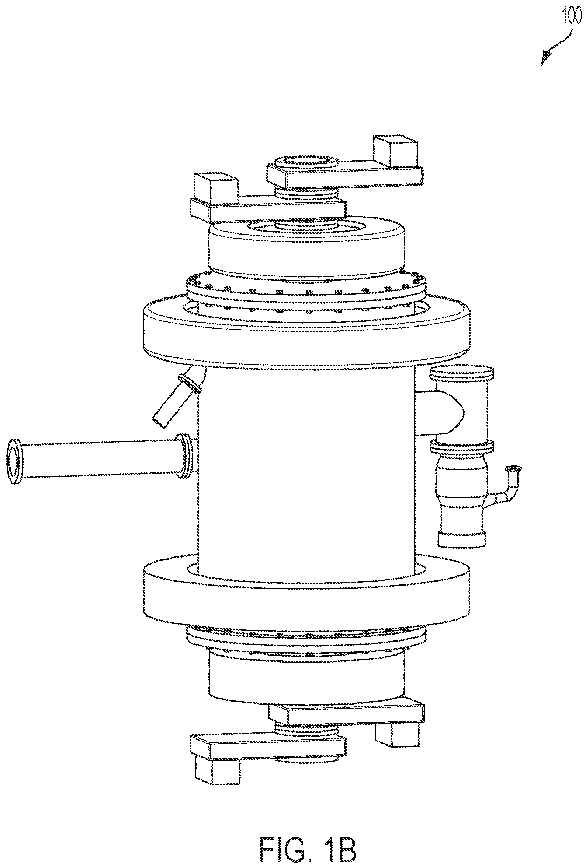

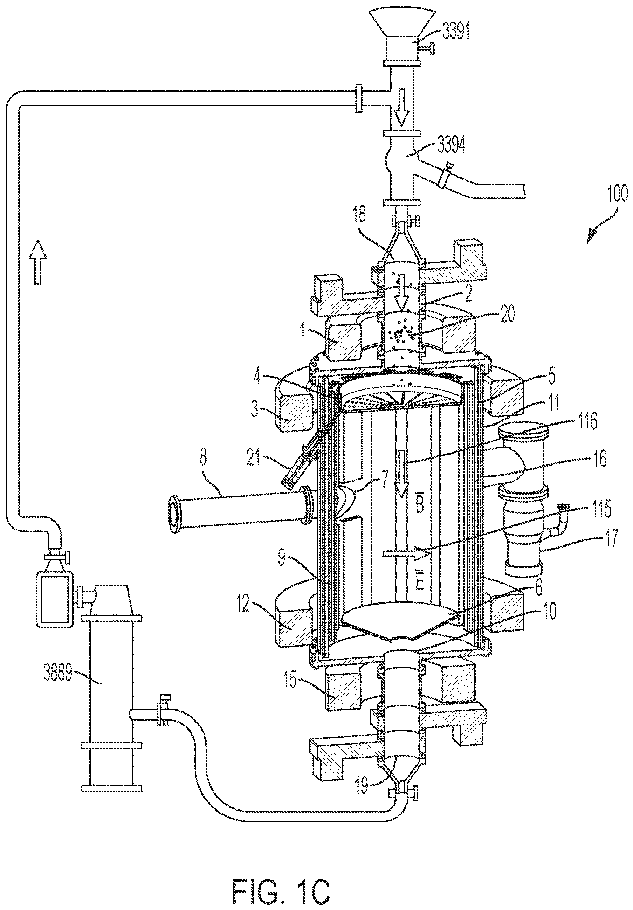

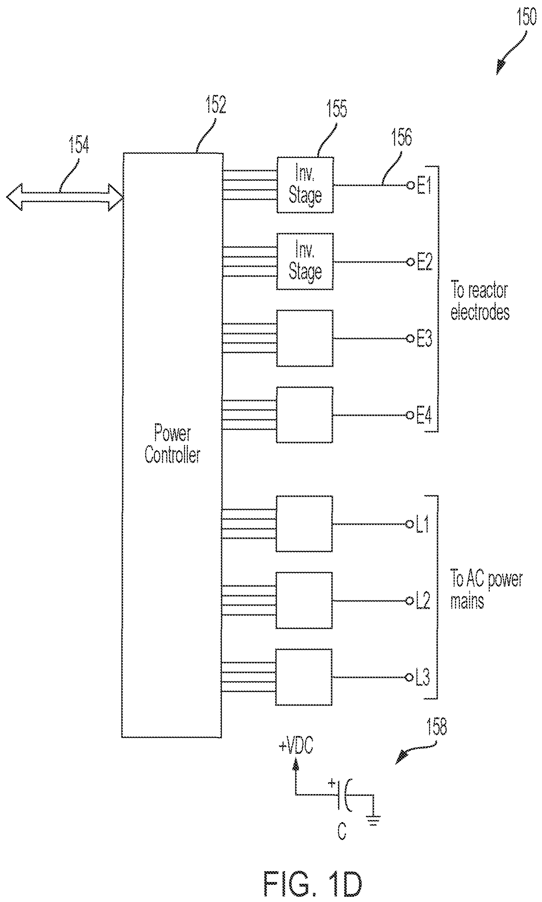

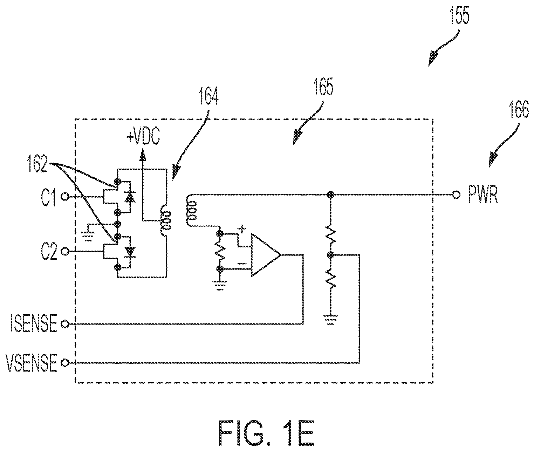

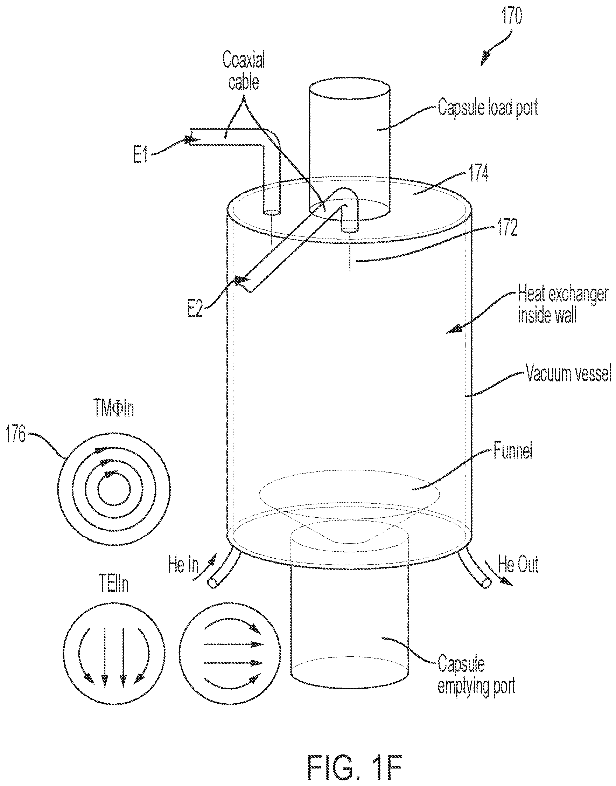

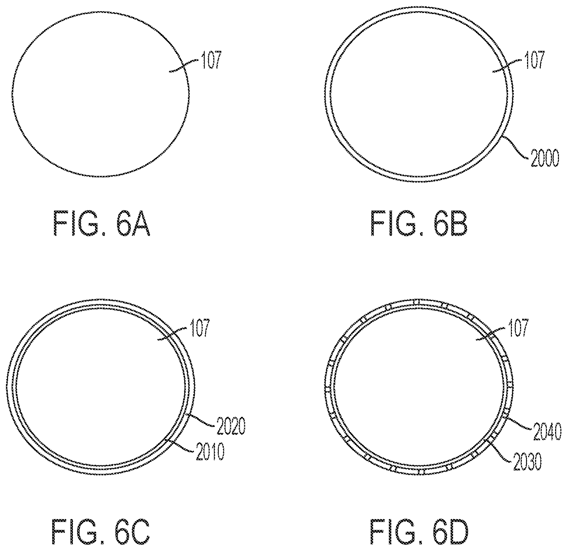

Fig. 1A depicts a partial cutaway view of various features of an example muon-catalyzed linearly extending fusion reactor 100, in accordance with aspects of the present disclosure. Fig. 1B shows the reactor 100 of Fig. 1A in a perspective (non-cutaway) view. As shown in Fig. 1A, a vacuum chamber 11 is at least partially evacuated via vacuum pump 17 and communicating vacuum port 16 to sufficiently low pressure conditions for operation. Fuel pellets 20 (also interchangeably referred to herein as "fuel capsules"; see further description of example fuel pellets 20 in section 4 below, with reference to Figs. 6A-6D) may be loaded via a first (e.g., top, as shown in FIG. 1) airlock 18, through intake port 2, and into fuel hopper 4. Fuel hopper 4 may be perforated with a plurality of openings in order to facilitate the radial (relative to central axis A of direction of extension of chamber 11) and/or other distribution of particles within the chamber 11. Vibrator motor 21 may be selectively operated to control or otherwise affect the rate at which the fuel pellets 20 pass through the chamber 11, and may be used to control the time distribution and spatial distribution of fuel pellets 20 in the chamber 11, including distribution axially from the outer surface of the chamber 11. After passing through the chamber 11, the fuel pellets 20 may pass through exit port 10 and may be collected via bottom airlock 19. Magnetic coils 1, 3, 12, and 15 may be used to create a magnetic field inside the chamber 11, which may, for example, be principally oriented so as to facilitate via magnetic force movement of particles/pellets 20 in a direction parallel to the axial direction A of the chamber 11 from the intake port 2 toward the center of the chamber 11 and from the exit port 10 toward the center of the chamber, with increasing magnitude of the field occurring proximal to the ends of the chamber 11 in order to confine charged particles near the center of the chamber 11.

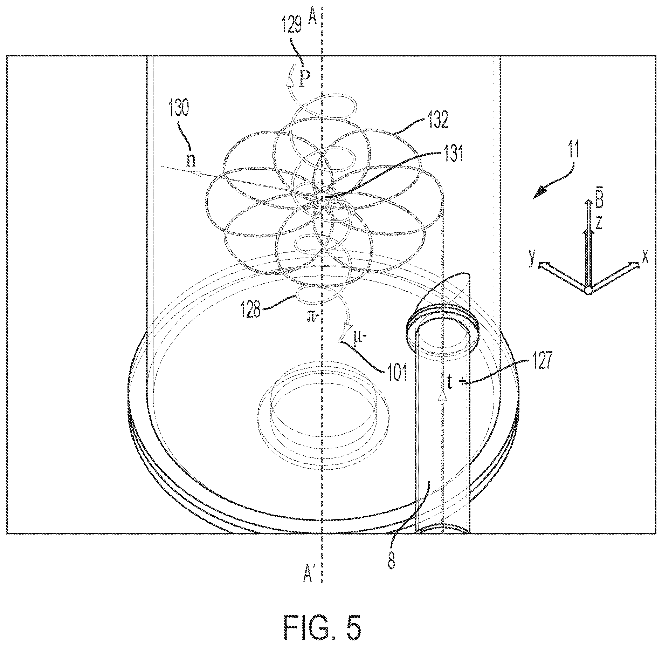

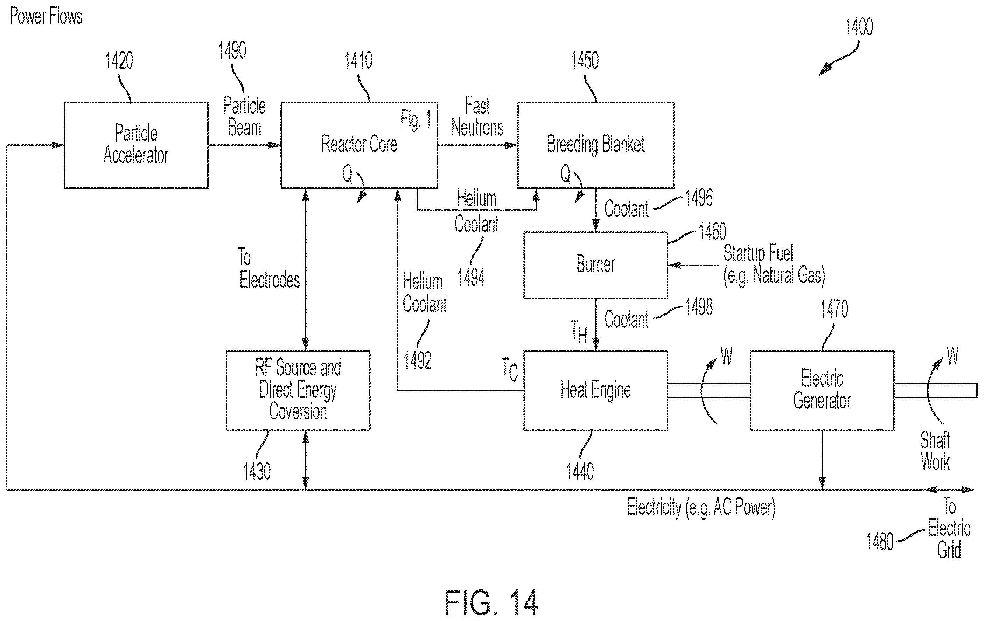

A stream of particles, such as particles in a particle beam produced via an accelerator (see, e.g., particle accelerator 1420 of Fig. 14), may enter the chamber through port 8. In one example embodiment, this particle beam may be or include a triton beam. The tritons directed by the beam may curve in the magnetic field as shown in Fig. 5, for example, and thereby increase the probability of triton-triton collision occurring near the axial midline A of the chamber 11. The beam energy (e.g., in one example implementation, approximately 590 MeV per nucleon) may be of a magnitude such that the resulting triton collisions result in a high probability of muons being created. The muons may be contained by or otherwise influenced by the magnetic field, and may be slowed by collisions with the fuel pellets 2-until muon catalyzed fusion occurs to a sufficiently desired level.

When muon catalyzed fusion occurs, each muon may be ejected with a relatively low kinetic energy, such as at an energy of only a few keV, and the muon may typically travel only a few microns thereafter, before catalyzing another fusion within the same fuel pellet 20, for example. Approximately 0.8% of the time, for D-T fusion, the muon may stick to the helium ion after fusion occurs. In this case, the muonic helium ion may have substantial kinetic energy (e.g., about 3.5 MeV), and a relatively high velocity, which may result in the ion exiting the fuel pellet 20 into the surrounding vacuum space of the chamber 11.

Electrodes 5 may be radially disposed around the chamber and driven with alternating current of varying phase so as to create a rotating and radially-directed electric field. The electric field may act to further accelerate the muonic helium ions, and cause them to experience more collisions than if it were not present. It may be advantageous for the electric field rotation rate to be near the cyclotron resonance frequency of the muonic helium atoms in the applied magnetic field. This increase in collisions in turn increases the number of collisions between muonic helium ions and the fuel, and increases the chance the muon will be stripped from the helium ion by a collision before the muonic helium atom is thermalized. The stripped muon may then be able to catalyze further fusions, such as via collisions with particles in the pellets, and thereby increase the energy output of the device as compared to related-art muon catalyzed fusion devices.

Helium ions created in the fusion partially ionize the fuel as they pass through it, which heats the fuel. This increases the temperature of the fuel pellets, causing them to radiate heat to the surroundings. This heats the electrodes 5, which contain channels for flow-through cooling. (Note that plumbing to these channels is not shown in the figure for clarity. Note also that the electrodes and heat exchangers may be separated into separate parts if desired.) The heat is transferred to the cooling fluid.

The fusion produces neutrons, which pass through the vacuum vessel and are collected in a breeding blanket (e.g., see breeding blanket 1450 of Fig. 14) located around the reactor 100 for manufacturing more fuel pellets or for refilling existing fuel pellets. The breeding blanket may contain lithium. Tritium may be produced in the breeding blanket by the nuclear reaction between the neutrons and the lithium. This tritium may be collected and used for manufacturing of more fuel pellets. Cooling fluid passing through the breeding blanket will be heated.

Cooling fluid flowing through the various parts of the reactor 100 and the breeding blanket will be heated to a high temperature. The heat may be used to drive a heat engine to generate electricity or do other useful work. Some or all of the heat may also be useful directly, for example for district heating, synthetic fuel and fertilizer production, or for other industrial processes requiring heat.

Many other variations are possible. A few are described here. The entering particle beam may be a muon beam, proton beam, deuteron beam, or a beam of another type of ion or particle. The electrodes may be segmented horizontally or vertically, and driven with a variety of waveforms to cause a variety of electric field gradients and shapes, varying in time and space, inside the chamber, which may be advantageous. The magnetic configuration may simply be a solenoid, rather than a magnetic mirror. The breeding blanket may be preferentially enriched with Lithium-6, to increase the heat output. The fuel pellets may be dispersed into the chamber by some other means, such as a sprayer, vibrator, electrodispersion, or may simply fall through the chamber. The magnetic coils may be conventional or superconducting. The heat exchangers for removing heat from inside the reactor 100 may be integrated with the electrodes or separated from them.

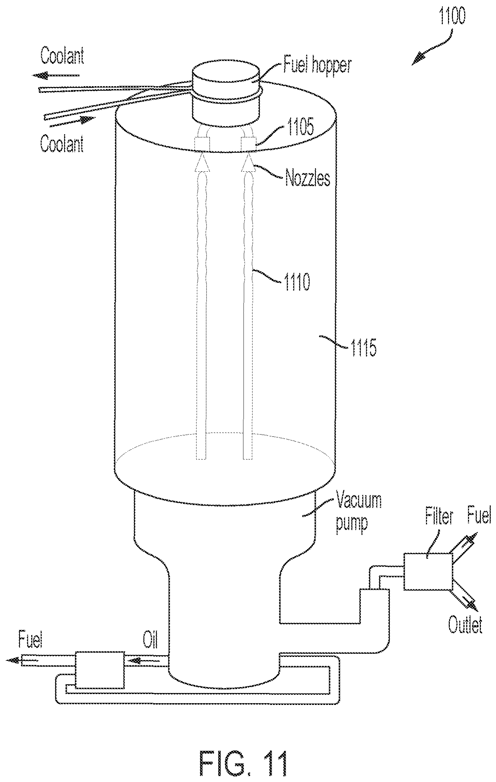

A refrigeration system may optionally be used to cool the fuel or fuel pellets before entering the reactor. This cooling may be used in conjunction with any fuel or pellet dispensing arrangement. The cooling may be helpful or required to keep the fuel in cryogenic liquid or solid form while in a fuel hopper for implementations (see, e.g., Fig. 11 and corresponding description). It may also be useful to refrigerate the fuel in the microcapsules (for example, to 200K) in order to decrease the maximum temperature of the fuel as it passes through the chamber, and thus limit the stress on the walls of the fuel microcapsules. With this approach, some portion of the energy produced by the reactor may be used to cool the fuel. This energy may be in the form of electricity to power an electrically-powered refrigeration unit, for example, or the mechanical output of the heat engine may be directly coupled to the refrigeration compressor, or a portion of the waste heat from the plant may be used to power an absorption refrigerator, or any combination thereof. If the reactor is located in outer space, for example, radiative cooling of the fuel to cryogenic temperatures may be employed.

Fig. 1C depicts a partial cutaway view of the reactor 100 of Figs.1A and 1B, with the addition of an interoperating conveyor system 338 to lift fuel pellets for recirculation to the reactor 100. A fill port valve 3391 provides a feature to add new fuel pellets to the reactor 100. A diverter valve 3394 provides a feature to remove worn out fuel pellets when they need to be refilled or replaced. The field directions of various example electromagnetic fields induced within the reactor 100 are shown with arrows. (Note that the E field rotates with time in the plane perpendicular to the B field.) Also shown in Fig. 1C, is a power vacuum conveyor 3889, to lift the fuel capsules for recirculation. The conveyor system may utilize a venturi generated vacuum, or an auger, for example. The conveyor system may be communicated with the reactor's top and bottom ports, such as via funnel shaped adaptors that direct the capsules into small diameter tubes. This approach may, for example, be beneficial for the recirculating mechanism to be able to work with a very low inventory of external fuel, beyond what is actually in the reactor 100.

Fig. 1D shows an example power drive and direct energy recovery circuit 150 usable in accordance with the example reactor 100 and additional features depicted in Figs. 1A-1C. This circuit 150 may be used to generate the waveforms applied to the electrodes, for examples, which may thereby be used to enhance muon reactivation and additionally to recover energy from the charged fusion products. The circuit 150 may include a power controller 152 that may interface 154 with a main controller, a plurality of inverter stage blocks 155, and a plurality of terminals 156 (e.g., electrodes), labeled E1..En and L1,L2,L3.

One or more of the inverter stage blocks 155 shown in Fig. 1D may use or comprise the circuity shown in Fig. 1E. The electrodes 5 in the reactor chamber 11, shown in Fig. 1A, may be connected to the "E1..En" terminals of Fig. 1D, for example. The AC power mains, for example three-phase AC power mains, may connect to the "L1,L2,L3" terminals of Fig. 1D. Each inverter stage 155 may consist of or include a pair of N-channel metal-oxide-silicon field effect transistor (MOSFET) power transistors 162, a transformer 164, and a monitoring circuit 165. The controller 152 (Fig. 1D) may raise or lower the voltage across the transformer primary 164 (Fig. 1E) by enabling one of the two transistors in the pair 162. Using feedback control and pulse-width modulation, for example, any suitable voltage waveform may be imposed at the electrode 166 (Fig. 1E). Power may flow in either direction, depending on whether the given electrode 166 is adding or removing kinetic energy to the particles in the reactor. The transformer 164 provides voltage amplification or reduction, so that the voltage at the output terminal 166 may be higher than the drain-to-source breakdown voltage of the transistor(s) 162. As shown in Fig. 1D, the main DC bus capacitor 158 may maintain the DC bus at a constant voltage level as charge enters or leaves the circuit 150 through each port. Power may flow in either direction; either from the power mains to the electrodes 156, for example during reactor startup, or from the electrodes 156 to the power mains, for example during operation, if the direct energy recovery from the helium ion is larger than the power needed to accelerate the muonic helium ions.

In an example implementation of the controller 152 shown in Fig. 1D, the controller 152 may generate three sinusoidal waveforms, at the cyclotron resonance frequency of the muonic alpha, muon, and electronic alpha, respectively. Each of these particles has a differing cyclotron resonance frequency, because each has a differing charge-to-mass ratio. The controller 152 may delay each of these sinusoidal signals by a phase factor, then sum them together over each sinusoid and output the sum to each electrode 156 using the power driver circuit 150. The sign of the phase factor used to delay each sinusoid may determine the rotation direction (clockwise or counterclockwise) of the electric field in the reactor chamber at the frequency of that sinusoid. The signs of the phase factors may be selected, relative to the direction of the magnetic field, so as to increase the kinetic energy imparted to muonic helium ions spiraling in the magnetic field, but also so as to reduce the kinetic energy of free muons and ordinary (electronic) helium ions spiraling in the magnetic field. Because of this effect, muon reactivation may be enhanced, loss of muons to the wall may be reduced, and energy may be recovered from the helium ions produced by fusion. An example equation for the voltage applied to each electrode is shown below:

$$V\_n = sum(i=0{:}2,\ A\_i * sin((w\_i) * t + 2 * pi * n * r\_i / N)\,)$$

where:

V_n is the voltage applied to electrode n, in volts
t is the elapsed time, in seconds
w_i is the angular frequency for particle number i, in radians/second
phi_i is the phase factor per electrode for particle number i, in radians
N is the number of electrodes
A_i is the amplitude of the voltage at the resonant frequency of each particle, in volts. The voltage may be varied in real-time by the main system controller in response to diagnostics, or may be set to fixed values determined empirically.

The frequency w_i is the gyrofrequency for the particle, with an applied detuning factor may therefore be:

$$w\_i = q\_i * d\_i * B / m\_i$$

where

q_i is the charge of the particle. In elementary charges, q_i is +2 for the alpha, +1 for the muonic alpha, and -1 for the muon, although this value may be converted to coulombs for the unit given.
d_i is a detuning factor, which may be empirically determined and may be varied in real time by the overall system controller in response to conditions in the reactor. In a typical implementation, for example, a slight detuning may be advantageous to increase the number of collisions experienced by the muonic alpha.
B is the magnetic flux density, in Tesla
m_i is the mass of the particle. In amu, this is approximately 4 for the alpha, 4.1 for the muonic alpha, and 0.1 for the muon, although this may be converted to kilograms for the units given.
r_i is the rotation direction of the field for the particle. In general this is +1 for the muonic alpha, to add kinetic energy, and -1 for the muon and alpha.

The waveforms for the terminals 156 (e.g., "L1,L2,L3") connected to the power mains may, in general, be configured so as to match the voltage, phasing, and frequency requirements for energy transmission onto the power grid, or onto a local power bus used to power the particle accelerator or other power-consuming components within a plant, for example, where the reactor is used to generate electricity.

Many variations of the controller waveforms and drive electronics shown and described with regard to Fig. 1D are possible and usable in accordance with variations in accordance with aspects of the present disclosure. For example, it may be advantageous, in some circumstances, to periodically reverse the rotation direction of the field, which excites the muonic alpha, in order to periodically speed up and then slow down muonic alphas, such as in order to keep them from acquiring too much energy and hitting the reactor wall. Because the cyclotron resonance frequency of the muon is much higher than that of the other two particles, for technological reasons it may be advantageous to omit generation of that corresponding field. Direct energy conversion from the energy in the helium ions may be omitted if desired, and the resultant energy may, for example, be captured thermally instead.

It may be advantageous to vary the field magnitude or frequency spatially over the extent of the reactor, in order to optimize performance, by using additional electrodes or shaped electrodes. For example, using a grid of electrodes, the rotation frequency or amplitude of the field may be made to vary along the length of the reactor, in order to match changes in magnetic field intensity, or to slow or redirect particles nearing the ends or edges of the reactor housing.

Other devices may be used for generation and control of the electrical signals, such as a BJT, klystron, IGBT, or cavity magnetron. The phase delays may be imposed by analog means, such as a quarter-wave plate, tapped delay line, or electronic delay circuit. The summations may be performed by analog means, such as via an RF combiner network. The RF signals may be carried on printed circuit traces, in wiring, by coaxial cables, or in waveguides, for example. The circuit elements, wiring, and transformers may be conventional or superconducting. The terminals for connection to the AC power mains may be omitted, and the device may be powered using a more conventional power supply, such as an offline flyback converter. The circuit 150 may be connected to DC power mains, and the cross-connection carried out using a buck converter, boost converter, or other DC/DC converter. The circuit 150 may be used also to produce the RF drive waveforms for the particle accelerator (e.g., accelerator 1420 of Fig. 14), which may be advantageous from an efficiency perspective by reducing the number of conversions from one voltage level to another.

The series inductance of the transformer 164 (Fig. 1E) may be selected to be electrically resonant with the capacitance of the reactor chamber, in order to advantageously produce electrical resonance at or near the cyclotron resonance frequency of one or more of the particles. Additional inductors or capacitors may be added to produce an electrical network with electrical resonances at the cyclotron resonance frequencies of multiple particles.

Rather than being purely sinusoidal, the drive waveforms may have another shape. For example, an arbitrary digitized periodic waveform may be stored in a lookup table, indexed by time. Further, for example, machine learning or other automated optimization techniques may be used to implement many variations on the waveform, either in simulation or on a real reactor, so as to determine an optimal waveform. The optimal waveform may vary depending on conditions. To accommodate this approach, for example, the controller may be designed to contain a multidimensional lookup table indexed by fuel pellet surface temperature, cooling water flow rate, fuel pellet spatial density, aging of the fuel pellets, or any other suitable set of measurable physical parameters, with each entry of the lookup table containing an optimized digitized waveform to maximize energy gain in the given conditions.

Fig. 1F depicts a reactor 170 that is a variation of the reactor 100 of Figs. 1A-1C, in which the electrodes are removed and replaced with two antennae 172, shown in Fig. 1F as protruding through the top plate 174. In this variation, the reactor 170 may function as a cavity resonator, with a circularly polarized wave propagating along its length, imposed by the antennas 172, which are driven by signals 90 degrees out of phase. This arrangement also results in production of a rotating electric field 176, with the direction of the electric field extending perpendicular to the direction of the magnetic field imposed by the coils. The chamber dimensions may be selected such that the chamber's fundamental frequency, as a cavity resonator in the desired mode, is approximately equal to the cyclotron resonance frequency of the muonic alpha. Or the chamber dimensions may be selected such that the chamber's fundamental frequency and/or harmonics of that frequency, as a cavity resonator in the desired mode, are approximately equal to the cyclotron resonance frequency of a plurality of particles, for example the muonic alpha, alpha, and muon.

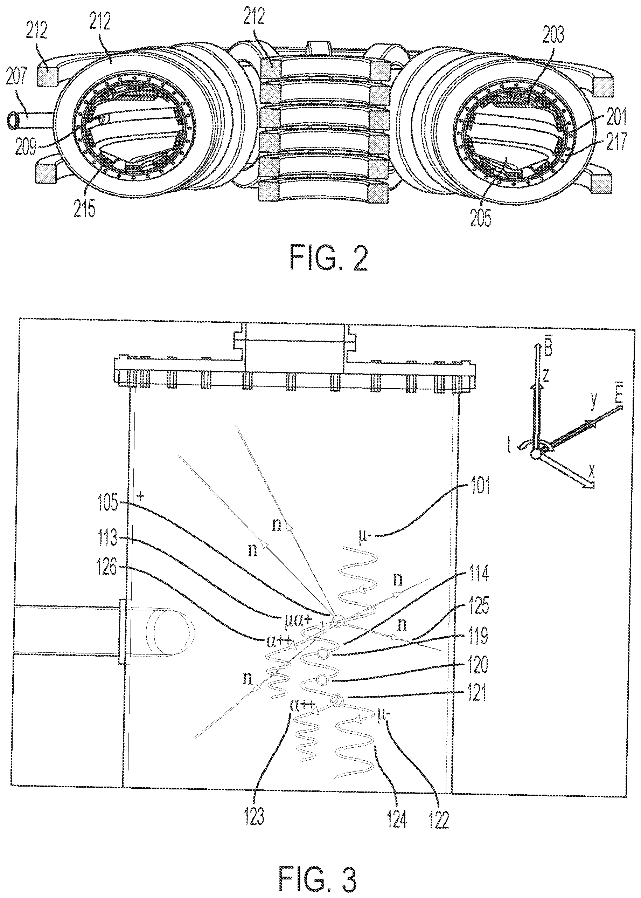

Fig. 2 shows a partial-cross-sectional view of another example reactor in accordance with aspects of the present disclosure, which contains similar features to those of the reactor of Fig. 1A. This reactor may operate by essentially similar principles to those of the linear oriented reactor of Fig. 1A, but may use a different magnetic confinement geometry, and so, among other advantages, may avoid losing or reduce the loss of muons that may occur at the end portions of the linear reactor of Fig. 1A. As shown in Fig. 2, a toroidal vacuum chamber 201 is at least partially evacuated to sufficiently low pressure conditions for operation. A perforated fuel hopper 203 with a plurality of openings distributes fuel pellets in the radial direction and along the circumferential axis of the toroidal vacuum chamber 201. Fuel pellets pass through the perforated fuel hopper 203 and pass through the chamber 201; the pellets are collected in trough 205. The fuel hopper 203 and the trough 205 may be fabricated from a high temperature ceramic or other suitable material. A stream of particles may enter the chamber through port 207 and side wall opening 209. Magnetic coils 212 may be used to create a magnetic field inside the chamber 201 in order to confine charged particles near the center of the chamber 201. Electrodes 215 may be disposed around the chamber and driven with alternating current of varying phase so as to create a variably rotating and radially-directed electric field. The electric field may act to further accelerate the muonic helium ions, and cause them to experience more collisions than if it were not present. It may be advantageous for the electric field rotation rate to be near the cyclotron resonance frequency of the muonic helium atoms in the applied electromagnetic field. This increase in collisions in turn may increase the number of collisions among muonic helium ions and the fuel, and increases the chance muons will be stripped from the helium ions by a collision before the muonic helium atom is thermalized. The stripped muons may then be able to catalyze further fusions, such as via collisions with particles in the pellets, and thereby increase the energy output of the device as compared to related-art muon catalyzed fusion devices. Helium ions created in the fusion may partially ionize the fuel as they pass through it, which may heat the fuel. This effect increases the temperature of the fuel pellets, causing them to radiate heat to the surroundings. The heated surrounding may correspondingly heat the electrodes 215, which contain channels for flow-through cooling. The heat is transferred to the cooling fluid. The fusion produces neutrons, which pass through the vacuum vessel walls and are collected in a breeding blanket 217 located around the vacuum chamber 201. The breeding blanket 217 may contain lithium. Cooling fluid passing through the breeding blanket 217 may be heated.

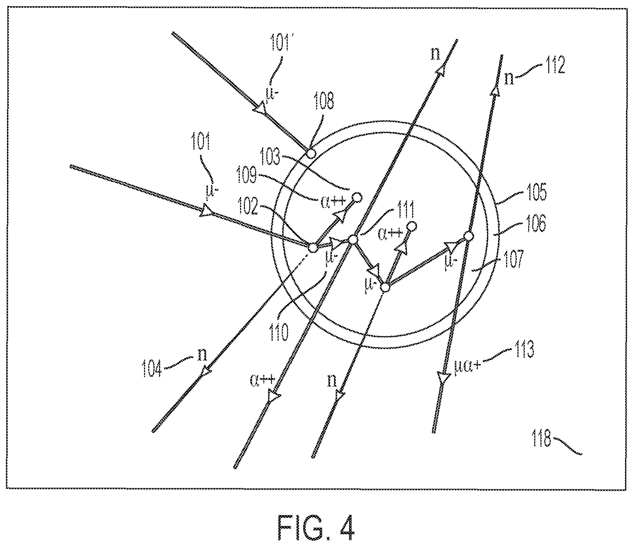

Fig 3 shows subatomic particle and ion trajectories in the active area of the reactor associated with muon catalyzed fusion. Fig. 4 presents a detailed view showing subatomic particles and ion trajectories inside an individual capsule. As shown in Fig. 4, some muons 101 may be slowed while passing through the capsule wall 106 and may eventually come to rest or otherwise cease overall velocity inside the capsule 105. For a muon 101' that ceases overall velocity while within the material of the capsule wall 106, the muon 101' may undergo atomic capture 108. However, for a muon 101 that ceases overall velocity within the fuel 107 contained within the capsule 105, the muon 101 may initiate muon catalyzed fusion 102. Most of the time, this phenomenon results in creation of a neutron 104, a helium ion 109, and release of the muon 110. The released muon 110 may have a small kinetic energy, on the order of its binding energy (approximately 5 keV), and in this situation may typically travel only a few micrometers and remain inside the same capsule 105 before ceasing overall velocity and catalyzing another fusion 111. Occasionally (approximately one in 125 times in the case of D-T fusion) the muon 101 may stick to the helium ion, and the reaction products may then likely be a neutron 112 and a muonic helium ion 113. The muonic helium ion 113 may have a large kinetic energy (approximately 3.5 MeV in the case of D-T fusion) and so typically the muonic helium atom 113 may exit the capsule 105 and enters the surrounding vacuum space. Because the muonic helium ion 113 is charged, the ion 113 may then follow an approximately helical trajectory 114 (Fig. 3) within the magnetic field within the reactor 100. As shown in Fig. 1C, the electrodes 5 may impose an electric field 115 that is approximately transverse to the magnetic field 116 and which rotates 176 (Fig. 1F) with time. Over time, the helical trajectory 114 (Fig. 3) of the muonic helium ion becomes synchronized with the rotation of the electric field 115 (Fig. 1C). The field 115 (Fig. 1C) may accelerate the particle 113 (Fig. 4) while it is in the vacuum space 118 (Fig. 4), and collisions with capsules 119, 120 (Fig. 3) may reduce the speed of the particle 113 (Fig. 3). As shown in Fig. 3, each time the particle 113 experiences a collision, there is some probability it will break up 121 into a free muon 122 and a free helium nucleus 123. If the muonic helium ion 113 does not break up, eventually the particle 113 ceases overall velocity due to a collision. The free muon 122 may travel in an approximately helical trajectory 124 in the magnetic field 116 (Fig. 1C), and typically may cease overall velocity when traveling within another capsule (e.g., capsule 105, 119, 120, 121), allowing repetition of the overall process and the catalysis of further fusions. The muon 122 has a mean lifetime of approximately 2.2 microseconds, and so eventually decays into an electron and neutrinos.

As shown in Fig. 4, during this process, for each muon (e.g., muons 101, 110), a large number of neutrons (e.g., neutrons 104, 112) may be released with high kinetic energy (e.g., 14.1 MeV in the case of D-T fusion). These neutrons (e.g., neutrons 104, 112) may have a low cross section probability for interaction with matter in the capsules (e.g., capsule 105), and due to their neutral charge may travel along straight trajectories 125 (Fig. 3) until they exit the vacuum chamber 11 and slow to a stop in the breeding blanket (see, e.g., breeding blanket 1450 shown in Fig. 14), generating useful heat and facilitating the breeding of tritium for subsequent use in the reactor.

During this process, as shown in Fig. 4, for each muon (e.g., muon 101), a large number of helium ions 109 may be released, each with intermediate kinetic energy (e.g., 3.5 MeV in the case of D-T fusion). These ions 109 may have a large cross section for ionization of the fuel 107 in the capsule 105, and often reduce overall velocity to a stop or near stop inside the same capsule 105, in which they are released. Sometimes these ions 109 may reach the vacuum space 118, where they may travel in helical trajectories 126 (Fig. 3) due to the magnetic field 116 (Fig. 1A). The cyclotron resonance frequency of the helium ions 109 may be approximately double that of the muonic helium ions 113. If inverse cyclotron direct energy conversion is employed, some of the helium ion energy may be recovered, such as by using the same electrodes 5 used to accelerate the muonic helium ions 113.

Fig. 5 depicts subatomic particle and ion trajectories inside the active area of the reactor chamber 11 associated with muon production, in implementations where the reactor is configured such that a muon beam is not provided. If a muon beam is provided, the muons may be injected into the reactor through port 8, from an external source, and this approach may have the advantage of simplicity and separation of concerns. In contrast to use of a muon beam, in the approach referred to with reference to Fig. 5, muon production inside the reactor may reduce the losses associated with reducing the emittance of the muon beam, and therefore may be advantageous for increasing efficiency.

In one example implementation, as shown in Fig. 5, a triton (tritium ion) beam 127 is produced by a particle accelerator, with approximately 590 MeV per nucleon energy, and enters the reactor through port 8. The charged tritons begin to curve as they enter the magnetic mirror field. The radial non-uniformity of the magnetic mirror field may cause the orbits of particles to precess about the axial centerpoint 131 of the device, following the spiraling trajectory 132 shown in Fig. 5. The axial non-uniformity of the magnetic mirror field may direct the trajectories toward the centerpoint 131 of the device. As more particles enter through port 8, the density of particles may become elevated about the axial centerline A-A' of the chamber near the centerpoint 131, and therefore most collisions between particles may occur proximal to the centerpoint 131. When a collision occurs with sufficient center-of-mass kinetic energy, there is some probability of a negative pion 128 being produced, as well as other energetic particles, such as high-speed protons 129 and neutrons 130. The negative pion 128 may decay in-flight to a negative muon 101, which may then initiate muon catalyzed fusion upon entering a capsule 105 (Fig. 4). Because most collisions may occur near the centerpoint 131, collisions that do not result in muon production, but instead result in angular displacement of the particles, may still typically result in the particles continuing in the same type of orbit, allowing for additional probability of collisions.

This general arrangement may also be used in the toroidal configuration reactor (Fig. 2). In this case, the combination of the toroidal field gradient and the spiraling action induced by the poloidal field may also results in elevated particle triton density near the axial centerline of the torus. Many types of particle beams may be used in place of a triton beam 127 of Fig. 5, for example a proton beam, deuteron beam, an ion beam, a pion beam, or a muon beam may be used.

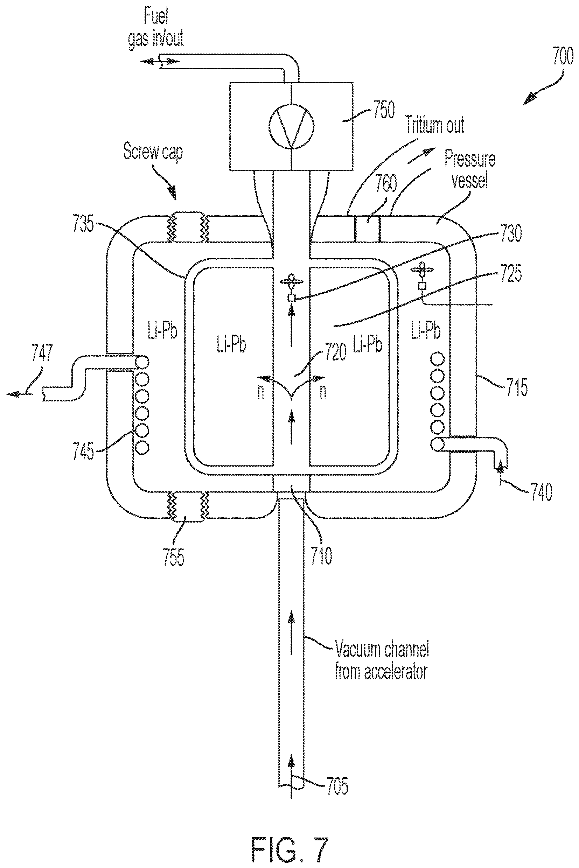

Fig. 7 contains a cross-sectional view of an example high density reactor 700, in accordance with aspects of the present disclosure. The reactor 700 of Fig. 7 may be, for example, a muon-catalyzed fusion reactor. The reactor 700 is predominantly axisymmetric with localized ports. Large external magnetic fields are not required for this example reactor 700, which may, for example, reduce costs of manufacture, among other advantages. The design of the reactor 700 also allows operation with the fuel at high temperature (e.g., 1000 K) and high pressure (e.g. 100,000 PSI), which may allow increased muon cycling rate and reduced sticking.

As shown in Fig. 7, a muon beam 705 passes through a window 710 (e.g., a diamond window) in an outer pressure vessel 715, and enters a tube 720 containing fuel. Before entering the tube, the kinetic energy and kinetic energy spread of the muons may be adjusted by a beam energy modulator so as to cause muon catalyzed fusion along a substantial portion of the length of the tube 720 once the muons enter the tube 720. The fusion produces fast neutrons, which pass through the walls of the tube 720 and into the surrounding breeding material 725, heating the material 725 and producing tritium. Substantial heating may also occur inside the fuel itself due to the slowing down of helium ions produced by the fusion. One or more powered impellers 730 may be placed within the tube 720 and/or within the breeding material 725 to facilitate forced convection heat transfer between fuel inside the tube 720 and the surrounding breeding material 725. The tube 720 may be connected to a series of other smaller-diameter tubes 735 to create a network of tubes, so as to allow for circulating flow of fuel and to enhance heat transfer to the surroundings. Because the breeding material 725 and the fuel may both be at high pressure, the tube 720 may have a small wall thickness, which may also enhance heat transfer.

Coolant 740 may enter the pressure vessel 715, pass through a coiled heat exchanger 745, and then exit via a tube 747. The heat thus removed may be used in a heat engine, for example, to perform useful work, and/or to generate electricity used to power the particle accelerator and other components of the overall reactor system.

A pump 750 may be used to pressurize the fuel to the desired pressure operating pressure. One or more ports 755 may be provided for filling and emptying of the breeding material 725. These ports 755 are labeled in Fig. 7 as screw caps, but may also function as communication passages that may communicate with a larger system for automated operation. A pump may also be used to pressurize the breeding material 725, if desired.

A palladium filter 760 may optionally be fitted into the wall of the pressure vessel 715, to allow tritium created during the breeding process to be continuously drawn from the reactor 700 through the provided tube. Temperature sensors (for example, thermocouples) throughout the reactor may be coupled to a control system, and used to regulate the temperature of the fuel and the breeding material 725 by adjusting the speed of the impellers 730, flow rate of coolant, the intensity of the muon beam 705, and the pressure of the fuel. Such a controller may be, for example, a multivariable state-variable controller implemented with a microcomputer, or a series of PID (proportional-integral-derivative) controllers.

In some variations of the reactor 700 of Fig. 7, the fuel may be or include deuterium-tritium, pure deuterium, another mixtures of hydrogen isotopes, or any other suitable muon catalyzed fusion fuel. The breeding material 725 may be or include liquid lithium-lead, solid lithium orthosilicate pellets contained in a liquid carrier, or any other suitable breeding material 725 capable of sustaining high pressures.

The window 710 may be made of or comprise diamond, silicon carbide, carbon-carbon composite, steel, or many other materials. The window 710 may also be omitted, in which case the muons may simply pass through other intervening materials to enter the tube 720. The pump 750 may incorporate, for example, a single piston to compress the fuel, or may involve use of any other type of pump, such as positive displacement, centrifugal, and/or peristaltic pump. The impellers 730 may use hydraulic motors, which may be desirable for operation in the high pressure, high temperature environment of the reactor 700. The impellers 730 may also be electric motor driven, electrohydrodynamic, magnetohydrodynamic, piezoelectric, or use another suitable technology for moving fluid. The coolant may be or comprise light water, heavy water, liquid sodium, helium, or other coolant suitable for use in nuclear reactors.

In one example implementation, a secondary heat exchanger may be communicatively located between the reactor coolant and the working fluid of the heat engine. The pump to pressurize the fuel may be omitted, and the reactor 700 may instead be operated by delivering (typically cryogenic) liquid fuel into the fuel tube 720, and then closing a valve or securing cap to allow the system to pressurize itself during operation as the fuel heats. The breeding material 725, fuel, or both may be used for coolant or instead of having a dedicated coolant, and pass out of the reactor pressure vessel through suitable ports to a suitable heat exchanger.

Rather than muons, the incoming particle beam 705 may alternatively consist of or include protons, deuterons, tritons, neutrons, or any other beam of baryons or other suitable particles. In the reactor implementation of Fig. 7, muon production will occur due to high energy collisions between these particles and the fuel inside the tube. This approach may be advantageous, as it may remove or reduce the energy losses from collecting the muons into a beam 705.

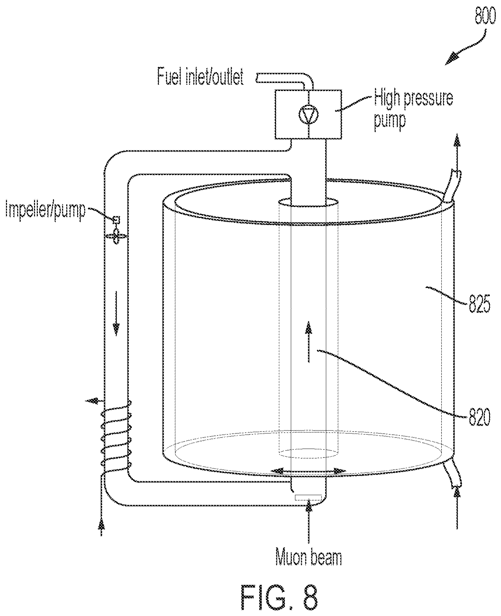

Fig. 8 shows various features of another high density reactor 800, in accordance with aspects of the present disclosure. The reactor 800 has some similar features to the reactor 700 of Fig. 7, but the breeding material 825 is kept in an annular vessel which surrounds the tube 820. The fuel may be maintained at high pressure, but the breeding material 825 may be maintained at a substantially different pressure, such as ambient pressure. The fuel tube 820 itself may contain the pressure of the fuel. The other applicable features and variations in the discussion of the high density reactor 700 of Fig. 7 may also apply to the reactor 8 of Fig. 8.

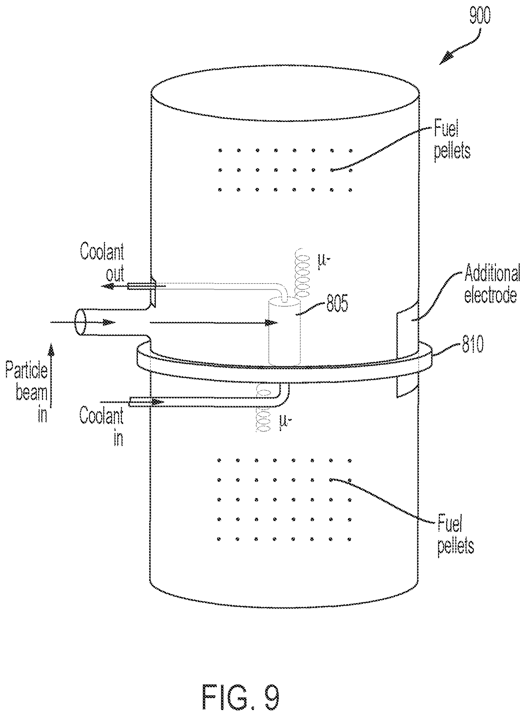

Fig. 9 shows various aspects of an internal muon production target 900 usable with various other features a reactor in accordance with aspects of the present disclosure. For example, with regard to the reactor 100 of Fig. 1A, a physical target 805 for the production of muons may be placed inside the reactor volume. For example, this target 805 may be or include a carbon rod. Because the target 805 may get hot, flow-through cooling through channels in the target 805 may be advantageous. It may also be advantageous to place an additional magnetic coil 810 around the reactor in the vicinity of the muon production target 805, in order to create a higher magnetic flux density in that area. This arrangement will tend to keep other trapped particles (for example, muonic helium ions) from returning to the target 805 and being captured by it, because of the repulsion effect (as in a magnetic mirror) of the increasing magnetic flux density as a particle approaches the target 805. Alternatively, or in addition, an appropriate arrangement may be accomplished with electrodes placed onto the muon production target 805 or onto walls of the chamber surrounding the target 805, in order to create a repulsive electrostatic potential for positively or negatively charged particles.

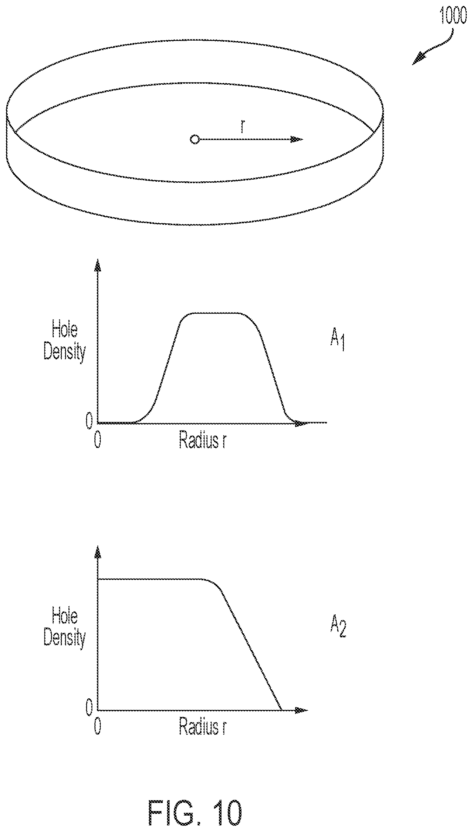

Fig. 10 shows an example variable hole density sifter 1000 usable with various other features of a reactor in accordance with aspects of the present disclosure. Holes or channels may be perforated into the sifter 1000 for use with the reactor 100 of Fig. 1A, with a non-uniform areal density. By this, it is meant that the size, number, or shape of the openings in the sifter 1000 may be varied over its area. This approach may result in a non-uniform density of fuel pellets entering into the reactor when the sifter 1000 is vibrated or when fuel is delivered onto it. This approach may be advantageous, for example, because the muonic helium ions spiraling in the field may tend to be attracted to areas of increased material density. This attraction occurs because the gyroradius of a particle reduces at the location where it is slowed down, which causes the guiding center of that particle's orbit in the magnetic field to become closer to the location where it has passed through material.

In one example implementation, as shown in the cross-sectional graphical representation $A_1$ of a radius of the sifter 1000 of Fig. 10, the density of holes in the sifter 1000 may zero or near zero at the center of the sifter 1000, increases with increasing radius, and then decreases with further increasing radius at the outer portion of the plate, which may be proximal to the chamber walls of the reactor. This characteristic of the sifter 1000 may prevent pellets from flowing into the central area of the reactor where beam-beam muon production may primarily occur (if this feature is used), in order to avoid interfering with that process. Additionally, the arrangement shown in the sifter 1000 of Fig. 10 may cause an increased density of fuel pellets in an annular area surrounding the center, to better contain the muonic helium ions and muons, and prevent them from interacting with the outer walls of the chamber.

In another example implementation, the density of holes in the sifter 1000 may be highest at the center of the plate, and constant proximal to the center, and then decrease in density as the radius increases, as shown in the cross-sectional graphical representation $A_2$ of the radius of the sifter 1000 of Fig. 10. This arrangement may be advantageous, for example, if beam-beam muon production is not employed in the reactor. For example, it may be advantageous to use this example implementation if muons are produced externally to the reactor, or if muons are produced inside the reactor by high energy collisions between the particle beam and the fuel pellets.

The intensity of vibration of the pellet sifter 1000 of Fig. 10 may be varied with time by the controller, for example, and this approach may be used to create non-uniform distributions of fuel pellets along the vertical direction inside the reactor. This arrangement may be advantageous, for example, to create a wall of pellets at the top and bottom of the reactor during operation, in order to reduce losses of muonic helium ions or muons at the ends. The reactor may be operated in a pulse mode. The controller may use the pellet sifter 1000 to dispense the proper three-dimensional distribution of pellets into the reactor, and command the accelerator to emit a particle beam only during the period of the dispensing cycle, when an appropriate configuration of particles is present at the proper place inside the reactor. The controller may determine when to enable the particle accelerator via sensing (e.g., with a camera viewing the particles) or via timing, for example.

Alternatively, the controller may continuously modulate the volume of particles being emitted by the accelerator in response to the phase of the pellet dispensing cycle in order to maximize or otherwise control the amount of energy produced. Such operation may be carried out via use of a digitized amplitude waveform stored in a lookup table, or calculated using a formula, for example. The controller may vary this waveform in response to sensor inputs, such as machine vision sensing of the particle configuration, machine vision sensing of thermal images of the particles, temperature sensing of the particles using a pyrometer, sensing of the temperature or flow rate of the coolant, input of the required electricity demand, or other sensed inputs or parameters. Waveform variation may be accomplished with parameters to an equation, with a multidimensional lookup table, with a neutral network, or with other similar methods.

Additionally, the sifter 1000 may be fitted with one or more actuated louvers to selectively block a portion or portions of the sifting area. The controller may control the position of these louvers with time in order to create desired three-dimensional patterns of fuel pellets inside the reactor. Such operation may be carried out together with control of the vibration motor, or the vibration motor may be omitted and the louver or lovers may provide the control.

Fig. 11 shows an example fuel dispensing nozzle 1100 usable with various other features of a reactor, in accordance with aspects of the present disclosure. In the reactor of Fig. 1A, for example, the fuel input port and sifter may be replaced by a fuel reservoir, valve and nozzle, such as are shown as dispensing nozzle 1100. One or more nozzles 1100 may be provided. For example, in one example implementation, a plurality of nozzles 1100 in a form similar to that of a shower head arrangement may be provided. The fuel may then be input into the chamber of the reactor by momentarily opening and then closing a valve or valves 1105, which may cause fuel to be sucked into the chamber by the vacuum inside the chamber and projected with velocity through the chamber. In one example implementation, the fuel hopper may contain microencapsulated fuel pellets, optionally surrounded by a carrier gas. When the valve or valves 1105 are opened, some number of fuel pellets may be sucked into and pass through the chamber. The pellets may be deposited into the collection funnel (in Fig. 1A), and the carrier gas may be removed from the chamber by the vacuum pump (such as a turbomolecular pump or a diffusion pump). By actuating the values with time, control schemes to create shaped arrangements of the fuel pellets may be realized. (See more detailed discussion of this in the section describing control of the sifter in conjunction with Fig. 10.)

In another example implementation, the fuel hopper may in fact be a pressure vessel and contain a fuel such as deuterium-tritium gas at high pressure. In this case, when the value or valves 1105 are opened, fuel may flow into the vacuum chamber as one or a plurality of gas jets or molecular beams 1110, surrounded by vacuum 1115. If the fuel pressure is sufficiently high, the gas jets may be supersonic. In this variation, the area inside the gas jet or molecular beam serves the function of the fuel pellets. Muon catalyzed fusion may occur within the gas jet or molecular beam 1110, and acceleration of the muonic helium ions may occur within the surrounding vacuum or rarefied gas. In this arrangement, there may be a region of intermediate density gas surrounding the gas jets. This gas may break down and form a plasma due to the applied electric fields. This creation of plasma may be advantageous, for example, because it may help to slow the expansion rate of the gas jet due to the magnetic plasma pressure caused by the externally applied magnetic field.

The above description describes continuous streams, but it may be also be preferable for the controller to pulse the valves 1105 open and closed with time, to create cylindrical or spherical packets of (typically supersonic) gas. In this case, cylindrical or spherical packets of gas or molecular beam 1110, which may be surrounded by plasma, may serve the function of the fuel pellets.

In yet another example implementation, the fuel hopper may be filled with liquid fuel (e.g., cryogenic liquid deuterium-tritium). A piston or other similarly functioning feature may be employed to place the liquid fuel under pressure. In this case, opening the valve or valves 1105 may dispense one or a plurality of streams of liquid fuel into the chamber. Due to the surrounding vacuum, depending on the pressure applied to the liquid in the hopper, the fuel may rapidly condense into a solid as it enters the chamber, resulting in one or a plurality of solid rods of fuel 1110 passing through the chamber. These streams or rods 1110 may serve a similar function to that of the fuel pellets. Fusion may occur at a high rate inside the streams or rods, and acceleration of the muonic helium ions may occur efficiently inside the surrounding vacuum space. In this case, the streams or rods may also become surrounded by plasma, which may be advantageous due to its containing magnetic pressure.

It may also be advantageous to pulse the valve or valves 1105 open and closed rapidly in the case of liquid fuel, to create a stream of liquid droplets or condensed solid fuel pellets passing through the reactor. The valves 1105 may be modulated in time by the controller, as is described elsewhere in this disclosure, to create a desired spatial configuration inside the reactor during the pulse from the particle beam.

In one example variation, the airlock 19 at the bottom of Fig.1A, used to remove fuel from the reactor 100, may be replaced by the inlet of a vacuum pump. For example, it may be advantageous, in the case that gas jets are used, to project the gas jets directly into the inlet of a turbomolecular pump or a diffusion pump. A gas separation feature, such as a palladium filter, may be fitted to the outlet of the vacuum pump to remove fuel for subsequent reuse. A mechanical filter, such as a screen, may be fitted to recover fuel pellets from the diffusion pump oil. Analogous other types of filtering may be used to recover the fuel from other types of vacuum pump.

The vacuum inside the reactor chamber may be replaced instead with material. For example, it may be advantageous to surround the reactor with a rarefied gas with a high electron affinity, such as sulfur hexafluoride, to reduce dielectric breakdown. In another variation, the surrounding gas may be or include a rarified mixture of hydrogen isotopes, to prevent capture of the muon onto high-Z elements. Partial breakdown of the surrounding gases may occur, but this may be tolerable or even advantageous, as the resulting plasma pressure may help to contain the fuel inside the pellets, or may provide a favorable environment for the stripping of muonic helium ions.

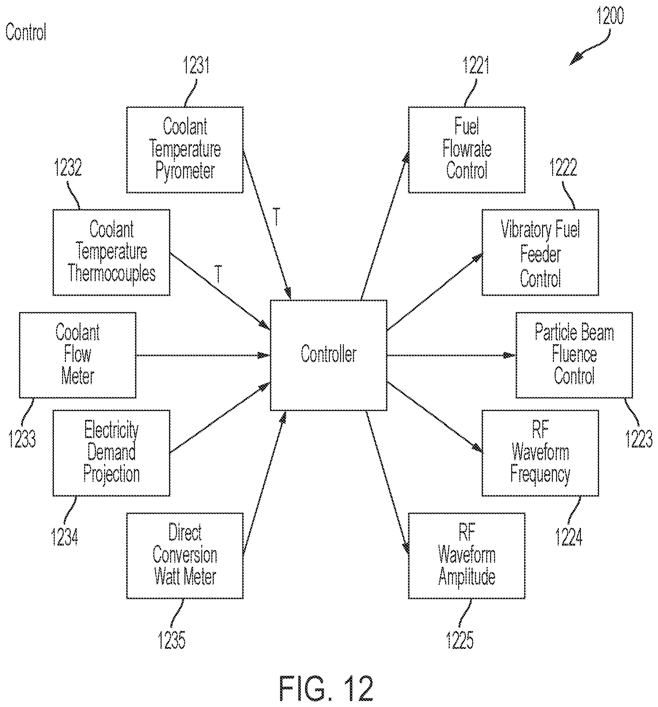

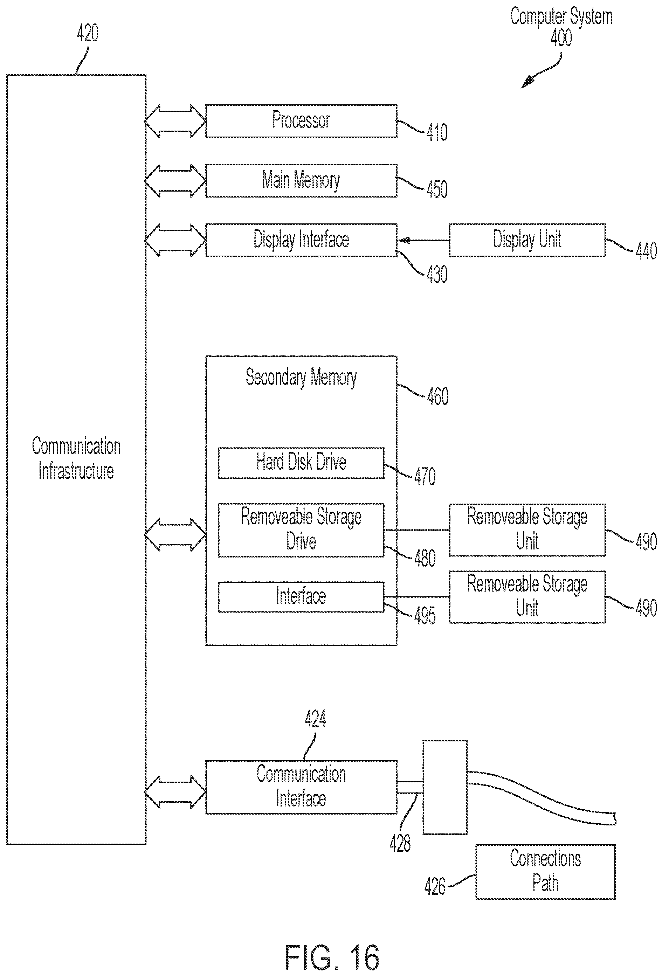

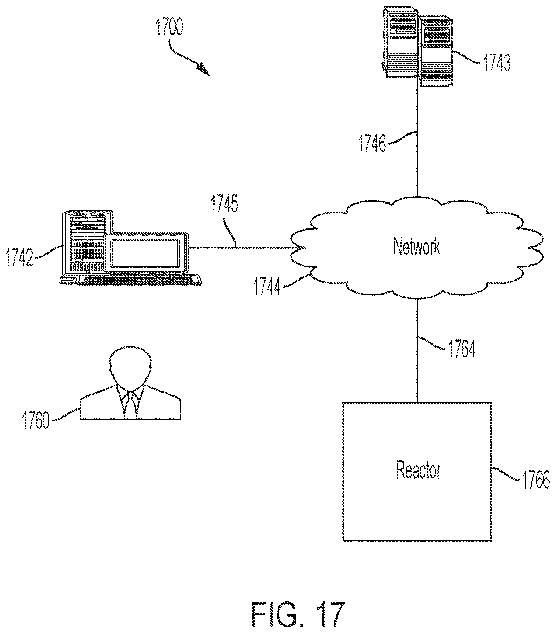

Fig. 12 shows a representative diagram of various aspects of an example control system 1200 for implementing a fusion reactor core in accordance with aspects of the present disclosure (See also Figs. 16 and 17 and corresponding description). As shown in Fig. 12, the control system 1200 may include a controller 1210, which may govern operation of the reactor, for example, via control of fuel flow rate 1221, vibratory fuel feeding 1222, particle accelerator current control 1223, electrode frequency of excitation 1224, and electrode amplitude of excitation 1225. The control system 1200 may monitor and assess/make adjustments for operation, for example, based on various inputs, such as capsule temperature parameters 1231, coolant temperature/temperature at other points (e.g., via one or more thermocouples) 1232, coolant flow rate (e.g., via a coolant flowmeter) 1233, electricity demand inputs (e.g., demand projections) 1234, and measurement of power consumed for operation and/or produced (e.g., via a direct conversion watt meter) 1235.

Fig. 14 presents a representative diagram of power and/or particle/fluid flow among various components and features of an example reactor system 1400 implementing a fusion reactor core in accordance with aspects of the present disclosure. As shown in Fig. 1, the reactor system 1400 may include, for example, a reactor core 1410 that may be surrounded by and/or otherwise interoperable with a breeding blanket 1450 that may, for example, produce a source of neutrons, such as tritium. The breeding blanket may also contain fissionable materials, such as Uranium or Thorium, for some implementations, in order to enable operation of a fusion-fission hybrid reactor, for example. Further surrounding and/or otherwise interacting with the reactor core 1410 is a work producing component 1440, such as a heat engine (e.g., a steam or other flow driven turbine). The work producing component 1440 may, in turn, transform the work into a different form, such as generation of electricity via an electric generator 1470

Flow 1492, 1494, 1496, 1498 of coolant, such as Helium, may occur among the reactor core 1410, the heat engine 1440, the breeding blanket 1450, and a burner 1460. A particle accelerator 1420 may provide and direct a particle beam 1490, such as a beam of tritons. Electrodes within the reactor core 1410 may be energized via an energizing source 1430, and/or may produce output energy. Some power input for the system may be provided via a separate energy source 1480, such as an electric power grid.

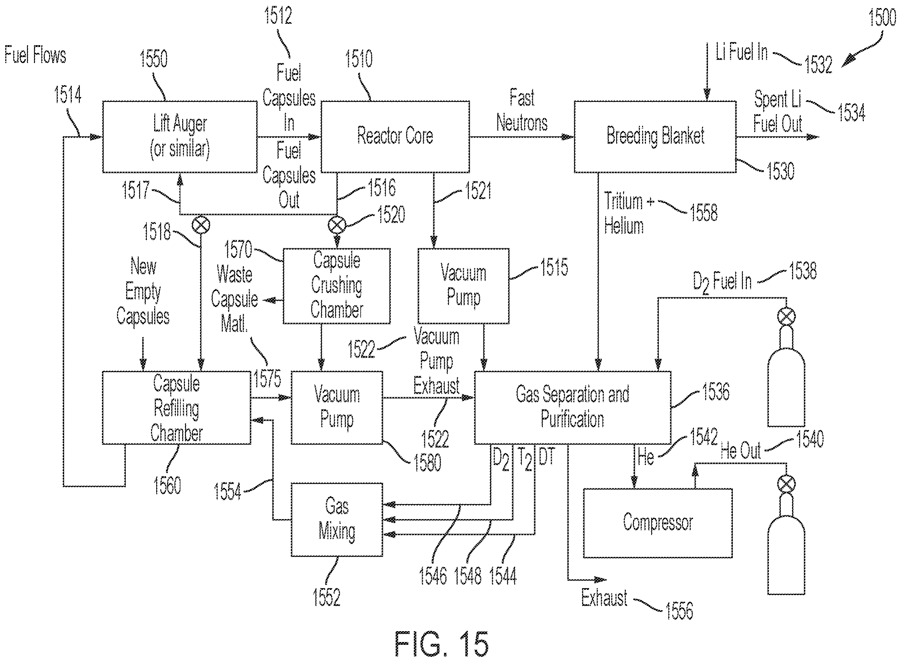

Fig. 15 shows a representative diagram of fuel flow among various components and features of an example reactor system 1500 implementing a fusion reactor core in accordance with aspects of the present disclosure. As shown in Fig. 15, fuel pellets may flow 1512, 1514 into the reactor core 1510 via a lift auger 1550 and/or a capsule refilling chamber 1560, for example. Fuel pellets may flow out 1516, 1517, 1518, 1520 from the reactor core 1510 to the lift auger 1550, to the capsule refilling chamber 1560 and/or to a capsule crushing chamber 1570. Fuel pellets may also flow 1521 from the reactor core 1510 via a vacuum pump 1515 to a gas separation and purification unit 1536.

Fast neutrons may migrate 1525 from the reactor core 1510 to a breeding blanket 1530. Lithium fuel 1532 may be input to the breeding blanket 1530 and spent fuel 1534 may be expelled from the breeding blanket 1530. The breeding blanket 1530 may thereby produce tritium and helium, for example, which may flow 1558 to the gas separation and purification unit 1536.

Crushed capsule material may be pumped 1522, such as via vacuum pump 1580, from the capsule crushing chamber 1570 to a gas separation and purification unit 1536. The capsule crushing chamber 1570 may also expel waste capsule material 1575. Capsule material may also be pumped 1524, such as via a vacuum pump 1590, from the capsule refilling chamber to the gas separation and purification unit 1536.

Deuterium fuel 1538 may be fed to the gas separation and purification unit 1536, and the gas separation and purification unit 1536 may produce a flow of deuterium 1546, tritium 1548, and some portion of mixed deuterium/tritium 1544 that may flow to a gas mixing unit 1552; a portion of the mixed deuterium/tritium 1544 may be exhausted or otherwise addressed, such as via a separate containment feature 1556. The gas separation and purification unit 1536 may also produce helium 1542, which may be compressed and contained 1540, for example. Output from the gas mixing unit 1552 may be fed 1554 to the capsule refilling chamber 1560.

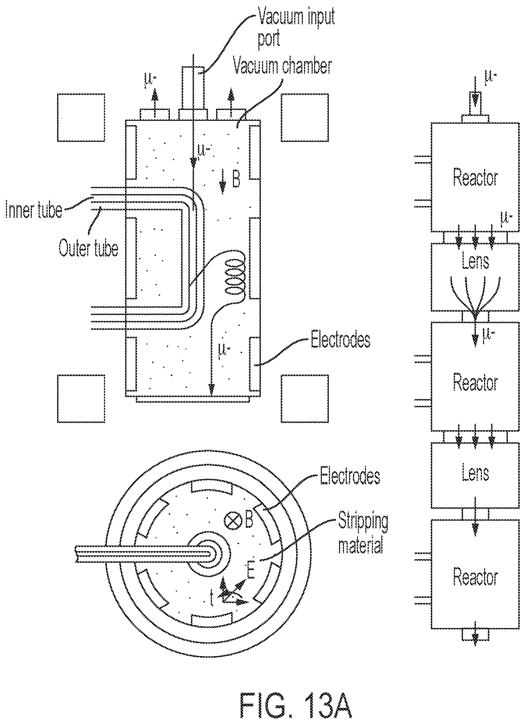

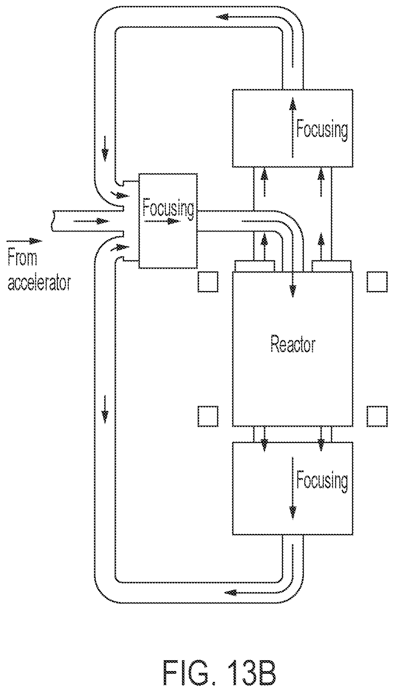

Figs. 13A and 13B depict an example reactor that works in conjunction with an external charged particle optics to return reactivated muons to the catalysis cycle, in accordance with aspects of the present disclosure. As shown in Fig. 13A, the reactor may receive one or more beams of muons, use the muons to catalyze fusion, reactivate stuck muons, and then output a portion of those reactivated muons via one or more ports. An external system of charged particle optics, such as a series of Einzel lenses for focusing and collimating the muons, and magnets for bending the muons around corners in beam pipes, may be used to combine the reactivated muons from each output port and focus the reactivated muons back into the input port. Connection of multiple reactors is also possible, with the reactivated muons from one reactor being able to be used to feed the input of another reactor, which may be advantageous for geometric reasons, or to reduce the amount of charged particle optics required, for example.

In Fig. 13A, an example implementation of such a reactor is shown, with an input port for muons at the top, and output ports for reactivated muons at the top and bottom. The reactor may have an outer vacuum chamber. Magnetic field coils may produce magnetic fields substantially directed from top-to-bottom inside the reactor, to function, for example, as a solenoid or magnetic mirror. A coaxial set of tubes may be oriented so as to enter the reactor from the side, turn and travel down the axial centerline, and then turn and exit. High-density, pressurized fuel (e.g., D-T) may flow through the outer tube. Lower density material (e.g., lower-density D-T) may flow through the inner tube. A collimated beam of muons may enters through the central top port, travel through the vacuum, penetrate the tubes, and travel through the central tube. The muons may experience multiple scattering by collisions with the gas inside the inner tube, and, as they travel along the length of the inner tube, may be scattered out and into the fuel in the outer tube along its length, where the muons may stop and cause muon-catalyzed fusion. Heat may be removed from the chamber by the flowing material in the tube, and also by thermal radiation to the walls. Neutrons may exit the chamber and may be used in a breeding blanket along the lines as described above in relation to other example implementations.

Periodically, a sticking event may occur, and a muonic helium ion may be ejected from the tube at high speed into the surrounding vacuum space. The vacuum chamber may be partially filled with stripping material. Electrodes may be radially disposed around the chamber and apply a varying (e.g., rotating) electric field along the lines as described above. This electric field may impart kinetic energy to the muonic helium ions, which may at least partially counteract the energy loss they experience while passing through the stripping material. (A stable equilibrium may be reached, if desired, with a kinetic energy of approximately 50 keV.) After a time, the muon may be stripped from the muonic alpha.

The example implementation in Fig. 13A shows three independent sets of electrodes, placed at different vertical locations along the reactor. The electrodes near the top and bottom may have a larger DC potential than the electrodes near the center. This arrangement may result in an electrostatic force that tends to trap or contain the positively charged muonic helium atoms at or near the center, where they may circulate until they are stripped, and direct negatively charged muons out the two ends, once the muons are stripped. The majority of these muons may then exit the reactor through the output ports at the top and bottom of the reactor, for example. Charged particle optics (along the lines as described above) may then be used to collect these muons and return them to the input port of this or of another reactor.

A single tube filled with fuel may be used rather than coaxial tubes. The tube walls may be made from or comprise carbon-carbon composite, carbon-fiber epoxy composite, or any other suitable material with high strength to density ratio. Dispensing and dispersion systems along the lines discussed above with regard to the fuel pellets may be used to dispense, disperse and suspend the stripping material. The reactor may be configured to preferentially output muons on one side by imposing a linear field gradient along its length, or by shaping the magnetic field as in a magnetic mirror to reflect muons from the opposite end.

Fig. 13B shows another example implementation of the reactor and features of Fig. 13A.

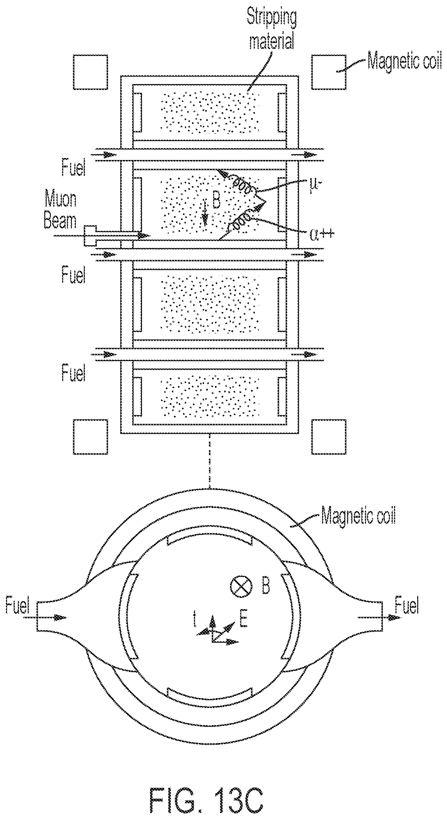

Fig. 13C depicts an example reactor that uses periodically-placed sheets of fuel, in accordance with aspects of the present disclosure. As shown in Fig. 13C, the vacuum chamber of the reactor has a substantially axial magnetic field. Thin cylindrical sheets of fuel may be placed periodically into the chamber. A set of radially disposed electrodes may be placed into the space between each sheet. A screen may be embedded into each sheet to allow charging of the sheet to a potential. The average DC potential of the sheets may be higher than that of the electrodes. A beam of muons may be projected into the reactor and cause muon catalyzed fusion in the fuel. When sticking occurs, the muonic helium ion may be ejected and trapped or contained in the space between two sheets, and kept moving by the energy imparted by the rotating electric field imposed by the electrodes and controller until the muon is stripped. After this stripping occurs, the muon may be projected back into one of the adjacent sheets by the DC vertical component of the electric field and may catalyze further fusion reactions.

The design of Fig. 13C may have a very high efficiency of direct energy conversion from the helium ions, which may allow use of this approach with thin sheets of solid cryogenic D-T fuel. This fuel sheet may be formed by extrusion and condensation of liquid D-T by suitable nozzles placed inside of the vacuum chamber, for example, so that the fuel may be replaced over time. Alternatively, gaseous D-T fuel may be used inside envelopes made from graphene, carbon fiber, or other similar high-strength-to-weight ratio materials. Carbon fiber or other fibrous material may be knit between the two sheets comprising the envelope to resist expansion. With this approach, heat may be removed from the reactor by flowing the fuel gas through the ports shown in Fig. 13B to a suitable heat exchanger. Other aspects of this example implementation (e.g., control, filling with stripping material, use of neutrons by a blanket, fuel processing) may be similar to those along the lines of other implementations described above.

Figs. 6A-6D depict several embodiments of a fuel pellet. In the case of D-T fusion, the fuel 107 is a mixture of the deuterium and tritium isotopes of hydrogen. Typically an approximately 1:1 mole ratio of deuterium and tritium are used. In the case of D-D fusion, the fuel 107 is deuterium. Other fuels and fuel mixtures are also possible, without departing from the spirit hereof.

Fig. 6A depicts an embodiment of a fuel pellet consisting simply of fuel, for example, a solid pellet of cryogenic fuel. Such pellets may be manufactured in high volume by spraying liquid hydrogen from a droplet-forming nozzle into a vacuum chamber, which optionally may be the same vacuum chamber used for the reactor. Such pellets do not have a shell, and so do not experience muon loss to the shell, which is an advantage. However, it may be challenging to keep the fuel at a sufficiently cold temperature to remain solid during reactor operation, and even more so when energy balance is taken into account, due to ionization heating by the helium ions.

Fig. 6B depicts a fuel pellet with a shell 2000, which functions as a miniature pressure vessel. In this embodiment, the fuel 107 may take on any state of matter during operation (e.g. gas) allowing operation at a range of temperatures. The shell material should have a high service temperature, high strength-to-density ratio, low permeability to the fuel, and low neutron activation. The shell may be made from graphene, diamond, a colossal carbon tube, silicon carbide, glass, titanium, or a variety of other materials.

One method to manufacture fuel pellet shells is to use femtosecond laser micromachining to cut polyhedral or spherical nets from a sheet of single or multi-layer graphene, and then to apply energy via mechanical vibration or fluid convection to fold them into polyhedra or spheres in the presence of high-pressure fuel. Heat or a laser may also be used to weld the capsules so as to enclose their contents.

Fig. 6C depicts another example embodiment for the fuel pellet, having an inner shell 2010 and an outer shell 2020. In this embodiment, the inner shell material prevents permeation of fuel from the capsule, and the outer shell material resists tensile loads. The inner shell may be constructed from glass, PVA, EVOH, or a variety of other materials with good hydrogen barrier properties. The outer shell could be constructed from graphene, diamond, silicon carbide, titanium, or a variety of other materials with high tensile strength. For heat/energy absorption and/or other advantages, the outer shell 2020 may optionally be colored or coated a dark color (e.g., have a black coating).

Fig. 6D depicts yet another example embodiment for the fuel pellet, having an inner shell 2030 and a perforated outer shell 2040. In this embodiment, the inner shell is a material with a highly temperature dependent permeability to hydrogen and other gases, such as glass. The outer shell is a material with a high tensile strength, such as graphene. In this design, the inner shell is used as a temperature-controlled valve to allow evacuating and filling of the capsule. The outer shell provides mechanical strength to prevent bursting. The outer shell may be perforated to allow the passage of gases, which is advantageous if it is made from a material with a very low permeability to gases such as graphene.

One method to manufacture these fuel pellets is described below. Precision hollow glass microspheres may be batch fabricated by a variety of methods, including the liquid-drop process or the dried-gel process. The glass microspheres may be thinned by immersion in HF (hydrofluoric acid) to bring them to the desired thickness. The remaining spheres may then optionally be coated with an additional hydrogen barrier layer such as alumina, which may be advantageous if the other shell material is diamond, or with an adhesion layer such as copper, which may be advantageous if the outer layer is graphene. The spheres may then be coated by chemical vapor deposition) with multiple layers of graphene. The graphene may then be perforated with small holes by femtosecond laser micromachining, without damaging the glass, to allow the passage of gases when filling or emptying the capsules.

The permeability of glass to gases increases exponentially with temperature, which provides a means to empty and fill the pellets. The pellets may be heated and placed inside a vacuum chamber to diffuse out gas stored inside. The pellets may then be heated and placed inside a pressurized chamber (which may, for example, be the same vacuum chamber in which the pellets remain, in some implementations), surrounded by pressurized fuel, to fill them. Note that it may be advantageous, when filling or emptying the pellets, to slowly ramp the pressure up or down, to avoid putting additional stress on the capsule walls. The fuel pellets may be emptied and refilled with fuel periodically throughout their service life, to remove contaminants such Helium-3 and Helium-4 created during tritium decay or during fusion. The heating may also provide a benefit by annealing defects caused by exposure to radiation. It may also be beneficial to repeat the chemical vapor deposition process for a limited time to seal small holes or defects in the outer shell, induced by handling or radiation damage.

The fuel pellets are shown as spheres but may be made in other shapes such as cylindrical or toroidal without departing from the spirit hereof. Especially in the case of cylinders or other elongate shapes, it may be advantageous to attach metallic or ferromagnetic materials at one or both ends of the cylinder, to cause it to orient itself along the direction of the magnetic field.

Aspects of the present disclosure may be implemented using hardware, software, or a combination thereof and may be implemented in one or more computer systems or other processing systems. In an aspect of the present disclosure, features are directed toward one or more computer systems capable of carrying out the functionality described herein. Various aspects of an example of such a computer system 400 are representatively shown in Fig. 16.

Computer system 400 includes one or more processors, such as processor 410. The processor 410 may be coupled to a communication infrastructure 420 (e.g., a communications bus, cross-over bar, or network). Various software aspects are described in terms of this example computer system. After reading this description, it will become apparent to a person skilled in the relevant art(s) how to implement aspects hereof using other computer systems and/or architectures.

Computer system 400 may include a display interface 430 that forwards graphics, text, and other data from the communication infrastructure 420 (or from a frame buffer not shown) for display on a display unit 440. Computer system 400 may include a main memory 450, such as random access memory (RAM), and may also include a secondary memory 460. The secondary memory 460 may include, for example, a hard disk drive 470 and/or a removable storage drive 480, representing a floppy disk drive, a magnetic tape drive, an optical disk drive, etc. The removable storage drive 480 may read from and/or write to a removable storage unit 490 in a well-known manner. Removable storage unit 490, represents a floppy disk, magnetic tape, optical disk, etc., which may be read by and written to removable storage drive 480. As will be appreciated, the removable storage unit 480 may include a computer usable storage medium having stored therein computer software and/or data.

Alternative aspects may include secondary memory 460 and may include other similar devices for allowing computer programs or other instructions to be loaded into computer system 400. Such devices may include, for example, a removable storage unit 490 and an interface 495. Examples of such may include a program cartridge and cartridge interface (such as that found in video game devices), a removable memory chip (such as an erasable programmable read only memory (EPROM), or programmable read only memory (PROM)) and associated socket, and other removable storage units 490 and interfaces 495, which allow software and data to be transferred from the removable storage unit 490 to computer system 400.

Computer system 400 may also include a communications interface 424. Communications interface 424 may allow software and data to be transferred among computer system 400 and external devices. Examples of communications interface 424 may include a modem, a network interface (such as an Ethernet card), a communications port, a Personal Computer Memory Card International Association (PCMCIA) slot and card, etc. Software and data transferred via communications interface 424 may be in the form of signals 428 which may be electronic, electromagnetic, optical or other signals capable of being received by communications interface 424. These signals 428 may be provided to communications interface 424 via a communications path (e.g., channel) 426. This path 426 may carry signals 428 and may be implemented using wire or cable, fiber optics, a telephone line, a cellular link, a radio frequency (RF) link and/or other communications channels. As used herein, the terms "computer program medium" and "computer usable medium" refer generally to media such as a removable storage drive 480, a hard disk installed in hard disk drive 470, and/or signals 428. These computer program products may provide software to the computer system 400. Aspects of the present disclosure are directed to such computer program products.

Computer programs (also referred to as computer control logic) may be stored in main memory 450 and/or secondary memory 460. Computer programs may also be received via communications interface 424. Such computer programs, when executed, may enable the computer system 400 to perform the features in accordance with various aspects discussed herein. In particular, the computer programs, when executed, may enable the processor 410 to perform the features in accordance with aspects of the present disclosure. Accordingly, such computer programs may represent controllers of the computer system 400.

Where aspects of the present disclosure may be implemented using software, the software may be stored in a computer program product and loaded into computer system 400 using removable storage drive 480, hard drive 480, or communications interface 424. The control logic (software), when executed by the processor 410, may cause the processor 410 to perform the functions described herein. In another aspect of the present disclosure, the system may be implemented primarily in hardware using, for example, hardware components, such as application specific integrated circuits (ASICs). Implementation of the hardware state machine so as to perform the functions described herein will be apparent to persons skilled in the relevant art(s).

In yet another variation, aspects of the present disclosure may be implemented using a combination of both hardware and software.

Fig. 17 is a representative block diagram of various example system components, for use in accordance with aspects of the present disclosure. Fig. 17 shows a communication system 1700 usable in accordance with aspects hereof. The communication system 1700 shown in Fig. 17 includes one or more accessors 1760 (also referred to interchangeably herein as one or more "users") and one or more terminals 1742. In one aspect, some data or commands for use in accordance with aspects of the present disclosure is, for example, input and/or accessed by accessor 1760 via terminal 1742, such as personal computers (PCs), command issuing devices including Graphical User Interfaces (GUIs), minicomputers, mainframe computers, microcomputers, telephonic devices, or wireless devices, such as personal digital assistants (PDAs), smart phones, or other hand-held wireless devices coupled to a server 1743, such as a PC, minicomputer, mainframe computer, microcomputer, or other device having a processor and a repository for data and/or connection to a repository for data, via, for example, a network 1744, such as the Internet or an intranet, and couplings 1745, 1746, 1764. The couplings 1745, 1746, 1764 include, for example, wired, wireless, or fiber optic links. In one example implementation, a reactor or reactor system 1766 may be coupled to network 1744 via coupling 1764 and be therefore able to send and receive data with assessor 1760, such that the user may be able to input various parameters, for example, and monitor and adjust operational information and receive sensed data. In another variation, the method and system in accordance with aspects of the present disclosure may operate in a stand-alone environment, such as on a single terminal.

An aspect of the present disclosure includes a fusion reactor including a reactor housing extending in an axial direction from a first end to a second end, wherein the reactor housing includes a first port, a second port, a fluid communication port, and a charged particle source delivery port, a fuel hopper located within the reactor housing proximal to the first end, an outlet located within the reactor housing proximal to the second end, a plurality of magnetic field generating coils located about the reactor housing, wherein the plurality of magnetic field generating coils are oriented to produce a directional magnetic field within the reactor housing, a plurality of electrodes extending within the reactor housing from the first end to the second end, wherein the plurality of electrodes are configured to generate a plurality time-varying electric fields via an electrical source, and wherein a flow of a plurality of fuel pellets received via the first port is distributed via the fuel hopper within the reactor housing.

An aspect of the present disclosure includes a reactor including a housing comprising a tube including a plurality of fuel pellets within the tube, an inlet port that receives a stream of charged particles, wherein the inlet port communicates with the tube, the tube being configured to guide the stream of charged particles toward the plurality of fuel pellets to generate a first plurality of particles, a breeding blanket disposed within the housing and outside of the tube, the breeding blanket is configured to receive at least a portion of the first plurality of particles passing through a wall of the tube and produce at least one of heat or a second plurality of particles, and a generator interoperable with the reactor to translate the heat to work.

An aspect of the present disclosure includes a cascade reactor system including a first reactor including a first tube partially disposed within the first reactor, wherein the first tube is configured to receive first fuel via a first input port and output first heat via a first output port, a first particle port configured to receive a first plurality of charged particles, wherein at least a portion of the first plurality of charged particles collides with at least a portion of the first fuel inside the first tube, wherein the collision produces the first heat and a second plurality of charged particles, and a field generator configured to generate a time-varying electric field within the first reactor to increase a rate of conversion of the second plurality of charged particles into a third plurality of charged particles, a charged particle lens configured to focus the third plurality of charged particles toward a second reactor, and the second reactor including a second tube partially disposed within the second reactor, wherein the second tube is configured to receive second fuel via a second input port and output second heat via a second output port and a second particle port configured to receive the third plurality of charged particles, wherein at least a portion of the third plurality of charged particles collides with at least a portion of the second fuel inside the second tube, wherein the collision produces the second heat.

An aspect of the present disclosure includes a reactor including a housing, a tube partially disposed within the housing, wherein the tube is configured to receive fuel via an input port and output heat via an output port, a particle port configured to receive a first plurality of charged particles, wherein at least a portion of the first plurality of charged particles collides with at least a portion of the fuel inside the tube to produce the heat and a second plurality of charged particles, a field generator configured to generate a time-varying electric field within the housing to increase a rate of conversion of the second plurality of charged particles into a third plurality of charged particles, a feedback tube connected to the housing, and at least one charged particle lens configured to direct at least a portion of the third plurality of charged particles exiting the housing back into the housing via feedback tube.

An aspect of the present disclosure includes a reactor including a plurality of fuel pellets, a target, a housing comprising, a particle port configured to receive a first plurality of charged particles that strike the target to generate a second plurality of charged particles, an input coolant port configured to direct coolant toward the target to reduce an operating temperature of the target, and an output coolant port configured to direct the coolant away from the target, and a field generator configured to generate a directional magnetic field to bias the second plurality of charged particles toward the plurality of fuel pellets.

An aspect of the present disclosure includes a reactor including a housing, a plurality of fuel sheets at least partially inserted into the housing, a field generator configured to generate a directional magnetic field approximately perpendicular to at least one of the plurality of fuel sheets, and a particle port configured to receive a first plurality of charged particles, wherein at least a portion of the first plurality of charged particles collides with at least a portion of the plurality of fuel sheets to produce the heat and a second plurality of charged particles.

Any of the apparatuses above, wherein a flow of charged particles received via the charged particle source delivery port is directable toward at least a portion of the plurality of fuel pellets located in a central axial location within the reactor housing, the flow of charged particles being accelerated by the plurality time-varying electric fields produced by the plurality of electrodes, wherein the directional magnetic field directionally biases the flow of charged particles from the first end toward the central axial location and from the second end toward the central axial location, and wherein the plurality of time-varying electric fields produced from the plurality of electrodes produces a spiral motion of the charged particles in the flow.

Any of the apparatuses above, further comprising an input chamber in communication with the first port and an output chamber in communication with the second port.

Any of the apparatuses above, wherein the plurality of electrodes extend parallel in an axial direction within the reactor housing from the first end to the second end.

Any of the apparatuses above, further comprising a generator interoperable with the fusion reactor to transform heat, radiation, or particles produced by the fusion reactor to work.

Any of the apparatuses above, further comprising a controller including one or more of a fuel flowrate control, a vibratory fuel feeder control, a particle beam current control, a radio frequency (RF) waveform frequency control, a RF waveform amplitude control, a direct conversion watt meter, an electricity demand projection module, a coolant flow meter, a coolant temperature thermocouple, or a coolant temperature pyrometer.

Any of the apparatuses above, wherein the plurality of fuel pellets each includes a shell encasing one or more of deuterium, tritium, or other hydrogen isotopes.

Any of the apparatuses above, wherein a material of the shell includes one or more of graphene, diamond, carbon tube, silicon carbide, glass, or titanium.

Any of the apparatuses above, further comprising a breeding blanket disposed within the reactor housing or at least partially surrounding the reactor housing, the breeding blanket being configured to produce a plurality of particles.

Any of the apparatuses above, wherein the breeding blanket includes lithium.

Any of the apparatuses above, wherein the plurality of particles includes tritium.

An aspect of the present disclosure includes a method of manufacturing a fuel pellet including filling a chamber with fuel, forming a net from a sheet a graphene within the chamber, forming the sheet into an encapsulating shape via an application of mechanical vibration or fluid convection in the chamber, and closing the formed capsule so as to enclose a portion of the fuel therein.

Aspect of the present disclosure includes a method of manufacturing a fuel pellet including applying a coating on an external surface of the fuel pellet, disposing the fuel pellet in a first chamber, reducing a first pressure of the first chamber to cause fluid to diffuse out of the fuel pellet, disposing the fuel pellet in a second chamber, and filling the second chamber with fuel at a second pressure greater than the first pressure to cause the fuel to diffuse into the fuel pellet.

By way of example, an element, or any portion of an element, or any combination of elements may be implemented as a "processing system" (hereinafter interchangeably referred to as a "signal determination device") that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

In another variation, the method and system in accordance with aspects of the present disclosure may operate in a stand-alone environment, such as on a single terminal. While the aspects described herein have been described in conjunction with the example aspects outlined above, various alternatives, modifications, variations, improvements, and/or substantial equivalents, whether known or that are or may be presently unforeseen, may become apparent to those having at least ordinary skill in the art. Accordingly, the example aspects, as set forth above, are intended to be illustrative, not limiting. Various changes may be made without departing from the spirit and scope of the disclosure. Therefore, the disclosure is intended to embrace all known or later-developed alternatives, modifications, variations, improvements, and/or substantial equivalents.

Thus, the claims are not intended to be limited to the aspects shown herein, but are to be accorded the full scope consistent with the language of the claims, wherein reference to an element in the singular is not intended to mean "one and only one" unless specifically so stated, but rather "one or more." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

Further, the word "example" is used herein to mean "serving as an example, instance, or illustration." Any aspect described herein as "example" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C. Nothing disclosed herein is intended to be dedicated to the public regardless of whether such disclosure is explicitly recited in the claims.

Aspects of the disclosure above are summarized in the following clauses, which form part of the description.

1. A fusion reactor, comprising: a reactor housing extending in an axial direction from a first end to a second end, wherein the reactor housing includes a first port, a second port, a fluid communication port, and a charged particle source delivery port; a fuel hopper located within the reactor housing proximal to the first end; an outlet located within the reactor housing proximal to the second end; a plurality of magnetic field generating coils located about the reactor housing, wherein the plurality of magnetic field generating coils are oriented to produce a directional magnetic field within the reactor housing; a plurality of electrodes extending within the reactor housing from the first end to the second end; wherein the plurality of electrodes are configured to generate a time-varying electric field via an electrical source; and wherein a flow of a plurality of fuel pellets received via the first port is distributed via the fuel hopper within the reactor housing.

2. The fusion reactor of clause1, further comprising an input chamber in communication with the first port and an output chamber in communication with the second port.

3. The fusion reactor of clause 1, wherein the plurality of electrodes extend parallel in an axial direction within the reactor housing from the first end to the second end.

4. The fusion reactor of clause 1, further comprising a generator interoperable with the fusion reactor to transform heat, radiation, or particles produced by the fusion reactor to work.

5. The fusion reactor of clause 1, further comprising a controller including one or more of a fuel flowrate control, a vibratory fuel feeder control, a particle beam current control, a radio frequency (RF) waveform frequency control, a RF waveform amplitude control, a direct conversion watt meter, an electricity demand projection module, a coolant flow meter, a coolant temperature thermocouple, or a coolant temperature pyrometer.

6. The fusion reactor of clause 1, wherein the plurality of fuel pellets each includes a shell encasing one or more of deuterium, tritium, or other hydrogen isotopes.

7. The fusion reactor of clause 6, wherein a material of the shell includes one or more of graphene, diamond, carbon tube, silicon carbide, glass, or titanium.

8. The fusion reactor of clause 1, further comprising a breeding blanket disposed within the reactor housing or at least partially surrounding the reactor housing, the breeding blanket being configured to produce a plurality of particles.

9. The fusion reactor of clause 1, wherein a flow of charged particles received via the charged particle source delivery port is directable toward at least a portion of the plurality of fuel pellets located in a central axial location within the reactor housing, the flow of charged particles being accelerated by the time-varying electric fields produced by the plurality of electrodes, wherein the magnetic field directionally biases the flow of charged particles from the first end toward the central axial location and from the second end toward the central axial location, and wherein the plurality of time-varying electric fields produced from the plurality of electrodes produces a spiral motion of the charged particles in the flow.

10. A reactor, comprising: a housing comprising a tube configured to provide muon catalyzed fusion fuel through the housing; a pump configured to cause the muon catalyzed fusion fuel to flow through the housing; an inlet port configured to receive a stream of charged particles, wherein the inlet port communicates with the tube, the tube being configured to guide the stream of charged particles toward the muon catalyzed fusion fuel to generate a first plurality of particles; a breeding blanket disposed within the housing and outside of the tube, the breeding blanket is configured to: receive at least a portion of the first plurality of particles passing through a wall of the tube; and produce at least one of heat or a second plurality of particles; and a generator interoperable with the reactor to translate the heat to work.

11. A cascade reactor system, comprising: a first reactor including: a first tube partially disposed within the first reactor, wherein the first tube is configured to receive first fuel via a first input port and output first heat via a first output port; a first particle port configured to receive a first plurality of charged particles, wherein at least a portion of the first plurality of charged particles collides with at least a portion of the first fuel inside the first tube, wherein the collision produces the first heat and a second plurality of charged particles; and a field generator configured to generate a time-varying electric field within the first reactor to increase a rate of conversion of the second plurality of charged particles into a third plurality of charged particles; a charged particle lens configured to focus the third plurality of charged particles toward a second reactor; and the second reactor including: a second tube partially disposed within the second reactor, wherein the second tube is configured to receive second fuel via a second input port and output second heat via a second output port; and a second particle port configured to receive the third plurality of charged particles, wherein at least a portion of the third plurality of charged particles collides with at least a portion of the second fuel inside the second tube, wherein the collision produces the second heat.

12. A reactor, comprising: a housing; a tube partially disposed within the housing, wherein the tube is configured to receive fuel via an input port and output heat via an output port; a particle port configured to receive a first plurality of charged particles, wherein at least a portion of the first plurality of charged particles collides with at least a portion of the fuel inside the tube to produce the heat and a second plurality of charged particles; a field generator configured to generate a time-varying electric field within the housing to increase a rate of conversion of the second plurality of charged particles into a third plurality of charged particles; a feedback tube connected to the housing; and at least one charged particle lens configured to direct at least a portion of the third plurality of charged particles exiting the housing back into the housing via feedback tube.

13. A reactor, comprising: a housing; a plurality of fuel sheets at least partially inserted into the housing; a field generator configured to generate a directional magnetic field approximately perpendicular to at least one of the plurality of fuel sheets; and a particle port configured to receive a first plurality of charged particles, wherein at least a portion of the first plurality of charged particles collides with at least a portion of the plurality of fuel sheets to produce the heat and a second plurality of charged particles.

14. A method of manufacturing a fuel pellet, comprising: applying a coating on an external surface of the fuel pellet; disposing the fuel pellet in a first chamber; reducing a first pressure of the first chamber to cause fluid to diffuse out of the fuel pellet; disposing the fuel pellet in a second chamber; and filling the second chamber with fuel at a second pressure greater than the first pressure to cause the fuel to diffuse into the fuel pellet.

15. A reactor, comprising: a plurality of fuel pellets; a target; a housing comprising: a particle port configured to receive a first plurality of charged particles that strike the target to generate a second plurality of charged particles; an input coolant port configured to direct coolant toward the target to reduce an operating temperature of the target; and an output coolant port configured to direct the coolant away from the target; and a field generator configured to generate a directional magnetic field to bias the second plurality of charged particles toward the plurality of fuel pellets.

## Claims

1.  A system for generating output particles, comprising:

    a housing extending in an axial direction from a first end to a second end, wherein the housing includes a first port, a second port, and a fluid communication port;
    a fuel hopper located within the housing proximal to the first end, the fuel hopper being configured to receive a plurality of fuel pellets via the first port and distribute the plurality of fuel pellets within the housing;
    an outlet located within the housing proximal to the second end;
    a plurality of magnetic field generating coils located about the housing, wherein the plurality of magnetic field generating coils are oriented to produce a directional magnetic field within the housing;
    a plurality of electrodes extending within the housing from the first end to the second end and configured to generate a time-varying electric field within the housing; and
    an input particle source delivery port configured to provide an input particle beam having input particles into the housing to generate the output particles.

2.  The system of claim 1, wherein the output particles include one or more of helium particles, neutrons, or tritium particles.

3.  The system of claim 1, wherein the fuel hopper is perforated with a plurality of openings configured to radially distribute the plurality of fuel pellets within the housing.

4.  The system of claim 1, further comprises a vibrator motor configured to spatially or temporarily control a distribution of the plurality of fuel pellets.

5.  The system of claim 1, wherein the plurality of magnetic field generating coils are configured to produce the directional magnetic field that confine one or more of the output particles or the plurality of fuel pellets toward a center of the housing.

6.  The system of claim 1, wherein the time-varying electric field is a rotating and radially directed electric field.

7.  The system of claim 1, wherein the plurality of electrodes are further configured to accelerate the input particle beam to increase collisions of input particles in the input particle beam.

8. The system of claim 7, wherein the plurality of electrodes are further configured to accelerate the input particles at a cyclotron resonant frequency of the input particles.

9. The system of claim 1, further comprises a breeding blanket configured to:

   receive at least a portion of the input particles; and
   generate helium particles and tritium particles in response to the at least portion of the input particles impinging the breeding blanket.

10. The system of claim 9, wherein the breeding blanket includes lithium.

11. The system of claim 1, further comprises a refrigeration system configured to cool the plurality of fuel pellets prior to the plurality of fuel pellets entering the housing.

12. The system of claim 1, further comprises a conveyor system configured to:

   receive a portion of the plurality of fuel pellets exiting the housing via the outlet;
   direct the portion of the plurality of fuel pellets back into the housing via the first port.

13. The system of claim 1, wherein the housing is a toroidal chamber.

14. The system of claim 1, wherein the housing is configured to operate at a pressure up to 100,000 pound per square inch (PSI).

15. The system of claim 1, wherein the input particle source delivery port is further configured to receive the input particle beam from a particle accelerator.

FIG. 1A

100

FIG. 1B

FIG. 1C

FIG. 1D

FIG. 1E

FIG. 1F

FIG. 2

FIG. 3

FIG. 4

FIG. 5

FIG. 6A

FIG. 6B

FIG. 6C

FIG. 6D

Fuel gas in/out

Screw cap

Tritium out

Pressure vessel

Li-Pb

Li-Pb

Li-Pb

Li-Pb

n   n

Vacuum channel from accelerator

700

750

760

735

730

725

715

747

745

755

740

720

710

705

FIG. 7

FIG. 8

FIG. 9

EP 4 738 384 A2

FIG. 10

38

FIG. 11

Control

1200

1231

1221

Coolant
Temperature
Pyrometer

Fuel
Flowrate
Control

1232

1222

Coolant
Temperature
Thermocouples

Vibratory Fuel
Feeder
Control

Coolant
Flow
Meter

Controller

Particle Beam
Fluence
Control

1233

1223

Electricity
Demand
Projection

RF
Waveform
Frequency

1234

1224

Direct
Conversion
Watt Meter

RF
Waveform
Amplitude

1235

1225

FIG. 12

FIG. 13A

FIG. 13B

FIG. 13C

FIG. 14

EP 4 738 384 A2

FIG. 15

EP 4 738 384 A2

Computer System
400

420

Processor ——410

Main Memory ——450

Display Interface ←—— Display Unit ——440
430

Communication
Infrastructure

Secondary Memory ——460

Hard Disk Drive ——470

Removeable Storage
Drive
480

Removeable Storage
Unit ——490

Interface
495

Removeable Storage
Unit ——490

424

Communication
Interface

428

426 —— Connections
Path

FIG. 16

FIG. 17

**REFERENCES CITED IN THE DESCRIPTION**

**Patent documents cited in the description**

- US 63063797